(19) Europäisches Patentamt
European Patent Office
Office européen des brevets

(11) **EP 4 075 358 B1**

(12) **FASCICULE DE BREVET EUROPEEN**

(45) Date de publication et mention
de la délivrance du brevet:
**15.11.2023 Bulletin 2023/46**

(21) Numéro de dépôt: **22166832.0**

(22) Date de dépôt: **05.04.2022**

(51) Classification Internationale des Brevets (IPC):
*G06Q 20/06* *(2012.01)*    *H04L 9/32* *(2006.01)*

(52) Classification Coopérative des Brevets (CPC):
**H04L 9/3247; G06Q 20/0655; G06Q 20/3223;
G06Q 20/38215; G06Q 20/389; G06Q 20/42;
H04L 9/3239; H04L 9/50**

(54) **GESTION DE LA MÉMOIRE DANS UN DISPOSITIF DE TRAITEMENT DE TRANSACTIONS**

SPEICHERVERWALTUNG IN EINER VORRICHTUNG ZUR TRANSAKTIONSVERARBEITUNG

MANAGEMENT OF THE MEMORY IN A DEVICE FOR PROCESSING TRANSACTIONS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.04.2021 FR 2103946**

(43) Date de publication de la demande:
**19.10.2022 Bulletin 2022/42**

(73) Titulaire: **IDEMIA France
92400 Courbevoie (FR)**

(72) Inventeurs:
• **DOTTAX, Emmanuelle
92400 Courbevoie (FR)**

• **DEL GIUDICE, Lauren
92400 Courbevoie (FR)**

(74) Mandataire: **Idemia
2, place Samuel de Champlain
92400 Courbevoie (FR)**

(56) Documents cités:
**EP-A1- 3 796 198**

• **DENNIS RICHARD ET AL: "A Temporal
Blockchain: A Formal Analysis", 2016
INTERNATIONAL CONFERENCE ON
COLLABORATION TECHNOLOGIES AND
SYSTEMS (CTS), IEEE, 31 octobre 2016
(2016-10-31), pages 430-437, XP033073727, DOI:
10.1109/CTS.2016.0082**

**Description**

Arrière-plan de l'invention

L'invention se rapporte au domaine des dispositifs aptes à traiter des transactions électroniques, telles que des transactions de paiement ou des transactions de réputation par exemple, ainsi qu'à des procédés pour mettre en oeuvre de telles transactions. L'invention concerne en particulier le traitement de transactions faisant appel à des mécanismes cryptographiques pour sécuriser lesdites transactions.

L'invention s'applique notamment, mais pas exclusivement, à des dispositifs de paiement pour réaliser des paiements de pair à pair dans une monnaie cryptographique (ou cryptomonnaie), c'est-à-dire une monnaie virtuelle utilisable sur un réseau informatique décentralisé public ou privé. D'autres applications destinées à transférer par voie électronique des crédits de diverses natures sous également envisagées.

Il est connu d'utiliser des dispositifs de paiement mettant en oeuvre un porte-monnaie virtuel pour recevoir ou réaliser un paiement dans une monnaie cryptographique quelconque. Une monnaie virtuelle de type cryptographique bien connue à ce jour est l'Ether qui s'appuie sur un système de paiement dénommé Ethereum. Le système Ethereum permet de faire des transactions de compte à compte, grâce à des logiciels appelés porte-monnaie virtuel (ou « wallet » en anglais) mis en oeuvre dans des dispositifs de traitement appropriés (smartphones, ordinateurs...). La validité de chaque transaction est vérifiée par des terminaux (ou logiciels) de vérification appelés « valideurs », les transactions une fois validées étant soumises par les « mineurs » dans un registre public appelé chaîne de blocs (ou « blockchain » en anglais) en raison de sa structure constituée d'une série de blocs. Chaque bloc définit des transactions validées par les valideurs et fait référence à des transactions antérieures.

Un porte-monnaie virtuel permet en particulier de créer un compte et de réaliser des transactions en Ether avec un compte tiers. Lors d'une transaction de paiement par exemple, le compte du porte-monnaie virtuel est débité d'un certain montant en Ether pour en créditer le compte tiers.

De façon connue, un dispositif de transaction peut être utilisé pour réaliser une transaction en mode « en ligne » (c'est-à-dire en coopérant avec un serveur distant appartenant à un système en ligne d'un opérateur tiers) ou en mode « hors ligne » (c'est-à-dire sans coopérer avec un serveur distant mais en coopérant directement avec un dispositif pair, en mode « pair-à-pair » ou « Peer To Peer »)

Pour traiter des transactions électroniques, telles que des transactions de paiement par exemple, un dispositif peut être configuré pour enregistrer dans sa mémoire interne des données de transaction représentatives de transactions précédemment acceptées. Un dispositif peut notamment stocker un historique de transaction pour permettre un suivi des transactions acceptées par ce dispositif, en particulier pour identifier des paiements reçus depuis un autre dispositif. Un tel historique peut notamment être utilisé pour sécuriser le traitement de transactions. Le brevet EP 3 796 198 A1 illustre l'utilisation d'un tel historique.

Cependant, l'espace mémoire nécessaire pour stocker ces données d'historique dans un dispositif de traitement augmente au fur et à mesure que de nouvelles transactions sont acceptées (ou reçues) par ce dispositif. Les ressources en mémoire et les ressources nécessaires pour générer un telle mémoire sont généralement relativement limitées, du fait de la nature même des dispositifs utilisés pour traiter des transactions. En particulier, bien que d'autres types d'équipement soient possibles, il est souvent fait recourt à des dispositifs mobiles tels que des cartes à puce ou des terminaux mobiles (smartphones, tablettes), qui par nature disposent de mémoires et de ressources de traitement relativement limitées.

Il existe donc un besoin pour une solution permettant une gestion efficace de la mémoire dans un dispositif de traitement de transaction, sans que cela compromette la sécurité des transactions réalisées. Ce besoin d'optimiser l'utilisation de l'espace mémoire dans de tels dispositifs de traitement s'applique pour le traitement de quelconques transactions électroniques telles que des transactions de paiement, des transaction de réputation visant à transférer des crédits de réputation (prenant par exemple la forme de « Like » ou « J'aime »), ou à tous autres types de transactions permettant de transférer un crédit d'un certain montant et d'une certaine nature depuis un dispositif dit « débiteur » (ou payeur) vers un autre dispositif dit « créditeur » (ou receveur).

La gestion de la mémoire doit se faire tout en garantissant la sécurité des transactions, y compris celles réalisées en mode hors ligne par les dispositifs de traitement en question. En particulier, il est important d'éviter les doubles paiements, et plus généralement de garantir qu'un même dispositif créditeur ne puisse pas accepter plusieurs fois des mêmes crédits d'un dispositif débiteur.

Objet et résumé de l'invention

A cet effet, la présente invention concerne un procédé de contrôle (dit aussi « procédé ») mis en oeuvre par un premier dispositif apte à traiter des transactions en coopération avec un deuxième dispositif, selon la revendication 1.

Les revendications dépendantes décrivent des modes de réalisation préférés de l'invention.

L'invention permet de gérer efficacement la mémoire du premier dispositif, sans compromette la sécurité des transactions réalisées. En effet, l'historique de transaction augmente en taille au fur et à mesure que de nouveaux crédits sont reçus par le premier dispositif.

L'étape de gestion permet de libérer si nécessaire de l'espace mémoire dans la première zone mémoire, c'est-à-dire lorsqu'un risque de saturation de cette zone mémoire est détecté, de sorte à ce qu'il y ait toujours un espace mémoire suffisant pour enregistrer un historique récent de transactions. Pour ce faire, un processus d'éviction est réalisé pour supprimer tout ou partie de la première zone mémoire sur détection que cette mémoire risque d'être prochainement saturée. En supprimant en particulier tout ou partie de l'historique compris dans la première zone mémoire, on peut éviter d'atteindre la saturation de ladite première zone mémoire, ce qui entraînerait des difficultés de fonctionnement du premier dispositif. Ce mécanisme d'éviction (ou de purge) de la mémoire est d'autant plus utile que les ressources en mémoires peuvent être relativement limitées dans certains types de dispositifs, tels que des terminaux mobiles, cartes à puce, etc.

En outre, la gestion de la première zone mémoire est réalisée tout en garantissant la sécurité des transactions, y compris celles réalisées en mode hors ligne par le premier dispositif avec des dispositifs externes tels que le deuxième dispositif. En particulier, l'invention permet d'éviter les doubles paiements, et plus généralement de garantir qu'un même dispositif créditeur ne puisse pas accepter plusieurs fois des mêmes crédits d'un dispositif débiteur. En effet, la purge de la première zone mémoire entraîne une perte partielle ou totale de l'historique H1, de sorte qu'il n'est pas toujours possible pour le premier dispositif de se fier à l'historique lors du traitement d'une transaction en cours. Le recours au compteur de génération comme défini ci-avant, et comme décrit ci-après dans des exemples particuliers, permet de résoudre ce problème et ainsi traiter les transactions de façon sécurisée.

Selon un mode de réalisation particulier, le traitement de la transaction courante comprend, avant l'étape b) :
m) envoi au deuxième dispositif de troisièmes données pour demander le versement par le deuxième dispositif du montant dudit crédit au compte associé au premier dispositif, lesdites troisièmes données comprenant le premier compteur de génération fixé à la valeur initiale.

Selon un mode de réalisation particulier, la mise à jour l1) est réalisée entre l'envoi m) et la réception b), causant la détection d'une non concordance des premier et deuxième compteurs de génération lors de la vérification c).

Selon un mode de réalisation particulier, les troisièmes données comprennent en outre une première clé publique du premier dispositif, le traitement de la transaction courante comprenant en outre :

- réception dans les deuxièmes données d'une deuxième clé publique du premier dispositif ;
- vérification que les première et deuxième clés publiques du premier dispositif coïncident ;

dans lequel la transaction courante est acceptée seulement si les première et deuxième clés publiques du premier dispositif coïncident.

Selon un mode de réalisation particulier, les troisièmes données comprennent en outre un deuxième montant du crédit à verser, le traitement de la transaction courante comprenant en outre :

- vérification que le montant du crédit à verser et le deuxième montant du crédit à verser coïncident (ou vérification que le montant du crédit à verser est supérieur au deuxième montant) ;

dans lequel la transaction courante est acceptée seulement si le montant du crédit à verser et le deuxième montant coïncident (ou que si que le montant du crédit à verser est supérieur au deuxième montant).

Selon un mode de réalisation particulier, les premières données reçues en b) comprennent :

- une première signature calculée à partir des deuxièmes données, et
- une deuxième signature calculée à partir des deuxièmes données et de la première signature ;

le procédé comprenant, après la réception b) :
n) vérification de la deuxième signature à partir de la première signature et des deuxièmes données reçues dans les premières données et à partir d'une clé publique de groupe associée à un groupe dont les premier et deuxième dispositifs font partie ;
la transaction courante n'étant acceptée que si le résultat de la vérification n) est positif.

Selon un mode de réalisation particulier, s'il est déterminé lors de la vérification b) que les premier et deuxième compteurs de génération ont des valeurs qui ne sont pas égales, la transaction courante est bloquée (ou rejetée).

Selon un mode de réalisation particulier, lors de la vérification c), le premier dispositif détermine que les premier et deuxième compteurs de génération ont des valeurs qui ne coïncident pas si le deuxième compteur de génération reçu dans les deuxièmes données a une ancienne valeur fixée par le premier dispositif antérieurement à une précédente mise à jour l1) du compteur de génération (c'est-à-dire antérieurement à une dernière mise à jour (ou modification) du compteur de génération qui s'est produite avant la mise à jour 11)).

Selon un mode de réalisation particulier, le premier identifiant de transaction attribué par le deuxième dispositif est un compteur représentatif d'un nombre courant de transactions réalisés par le deuxième dispositif.

Selon un mode de réalisation particulier, lors du stockage i) la nouvelle entrée est associée à la clé publique du deuxième dispositif et au premier identifiant de transaction ;
dans lequel la vérification g) comprend :

- détermination d'un deuxième identifiant de transaction stocké, en association avec la clé publique du deuxième dispositif, dans une entrée détectée dans l'historique au cours de la vérification e) ; et
- comparaison du premier identifiant de transaction avec le deuxième identifiant de transaction,

dans lequel la première condition prédéterminée est détectée comme étant satisfaite si les premier et deuxième identifiants de transaction sont différents ou si les premier et deuxième identifiants de transaction sont des compteurs tels que le premier identifiant de transaction est supérieur au deuxième identifiant de transaction.

Selon un mode de réalisation particulier, le procédé est mis en oeuvre par un premier porte-monnaie virtuel implémenté par le premier dispositif, en coopération avec un deuxième porte-monnaie virtuel implémenté dans le deuxième dispositif, la transaction courante étant une transaction de paiement dudit crédit dans une monnaie cryptographique.

Selon un mode de réalisation particulier, la transaction courante est une transaction de réputation et le crédit versé lors de ladite transaction de réputation est un crédit de réputation.

Selon un mode de réalisation particulier, les premier et deuxième dispositifs coopèrent lors du traitement de la transaction courante en mode pair-à-pair.

Selon un mode de réalisation particulier, le premier dispositif est un dispositif parmi : une carte à puce et un terminal. De même, le deuxième dispositif peut être une carte à puce ou un terminal. De façon générale, les premier et deuxième dispositifs peuvent comprendre un élément sécurisé (comme développé plus en détail ci-après).

Selon un mode de réalisation particulier, lors de la détection k), la deuxième condition prédéterminée est satisfaite si l'espace occupé dans la zone mémoire atteint une portion prédéterminée de l'espace totale de la première zone mémoire.

Selon un mode de réalisation particulier, dans lequel la mise à jour en l1) du premier compteur de génération est réalisé par une incrémentation de la valeur courante dudit premier compteur de génération.

Selon un mode de réalisation particulier, au cours de l'éviction l2), toute la première zone mémoire est vidée afin de libérer de l'espace mémoire.

Selon un mode de réalisation particulier, lors du processus d'éviction l) :

- la mise à jour l1) et l'éviction l2) sont réalisées en concomitance, ou
- l'éviction l2) est réalisée après la mise à jour l1).

Selon un mode de réalisation particulier, la mise à jour l1) du premier compteur de génération cause un blocage de toutes transactions, traitées par le premier dispositif, pour lesquelles le deuxième compteur de génération reçu en b) a une valeur qui diffère de la nouvelle valeur.

Selon un mode de réalisation particulier, l'étape de gestion de la première zone mémoire comprend, en réponse à la détection k) et avant le processus d'éviction l) :

o) envoi d'une requête de transactions en ligne à un système en ligne comprenant au moins un serveur ;
p) réception, en réponse à ladite requête de transactions en ligne, de données de transaction en ligne représentatives d'au moins une transaction en ligne réalisée par ledit système en ligne en coopération avec au moins un dispositif externe pour verser un crédit au compte associé au premier dispositif, lesdites données de transaction en ligne comprenant un troisième compteur de génération en association avec chaque transaction en ligne ; et
q) vérification pour chaque transaction en ligne que les premier et troisième compteurs de génération ont des valeurs qui sont égales; et
r) mise à jour, à partir des données de transaction en ligne correspondant à chaque transaction en ligne dont le troisième compteur de génération coïncide avec le premier compteur de génération, du solde de compte stocké dans la deuxième zone mémoire.

Selon un mode de réalisation particulier, le processus d'éviction l) comprend, après la mise à jour l1) : s) envoi au système en ligne du premier compteur de génération ayant la nouvelle valeur assignée en l1), de sorte que le serveur en ligne puisse associer la clé publique du premier dispositif avec le premier compteur de génération fixé à la nouvelle valeur pour en permettre l'accès à au moins un dispositif externe pour traiter des transactions ultérieures.

Selon un mode de réalisation particulier, l'envoi s) cause la mise à jour par le système en ligne d'une valeur courante du troisième compteur de génération pour qu'il soit égal à la nouvelle valeur.

L'invention vise également un deuxième procédé de contrôle mis en oeuvre par un système selon la revendication 15.

Dans un mode particulier de réalisation, les différentes étapes du procédé de contrôle sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre dans un dispositif (ou dispositif de traitement) ou plus généralement dans un ordinateur, ce programme comportant des instructions adaptées à la mise en oeuvre des étapes d'un procédé de contrôle selon la revendication 16.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur ou plus particulièrement par un dispositif de traitement, ce support d'information comportant des instructions d'un programme d'ordinateur tel que défini dans ce document.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Pour chaque étape des procédés de l'invention, les différents éléments de l'invention (en particulier : le premier dispositif, le deuxième dispositif, le système comprenant les premier et deuxième dispositifs, ainsi que le système en ligne) peuvent comprendre un module correspondant configuré pour réaliser ladite étape.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné.

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, etc.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:

[ Fig. 1] La figure 1 représente schématiquement un environnement comprenant un premier dispositif apte à coopérer avec un deuxième dispositif et avec un système en ligne et selon un mode de réalisation particulier de l'invention ;

[ Fig. 2] La figure 2 représente schématiquement la structure d'un premier dispositif selon un mode de réalisation particulier de l'invention ;

[ Fig. 3] La figure 3 représente schématiquement la structure d'un deuxième dispositif selon un mode de réalisation particulier de l'invention ;

[ Fig. 4] La figure 4 représente schématiquement des modules mis en oeuvre par un premier dispositif selon un mode de réalisation particulier de l'invention ;

[ Fig. 5] La figure 5 représente schématiquement, sous forme d'un diagramme, les étapes d'un procédé de contrôle selon un mode de réalisation particulier de l'invention ;

[ Fig. 6] La figure 6 représente schématiquement, sous forme d'un diagramme, les étapes d'un procédé de contrôle selon un mode de réalisation particulier de l'invention ;

[ Fig. 7] La figure 7 représente schématiquement, sous forme d'un diagramme, les étapes d'un procédé de contrôle selon un mode de réalisation particulier de l'invention ;

[ Fig. 8] La figure 8 représente schématiquement, sous forme d'un diagramme, les étapes d'un procédé de contrôle selon un mode de réalisation particulier de l'invention ; et

[ Fig. 9] La figure 9 représente schématiquement, sous forme d'un diagramme, les étapes d'un procédé de contrôle selon un mode de réalisation particulier de l'invention.

Description détaillée de plusieurs modes de réalisation

Comme indiqué précédemment, l'invention se rapporte aux dispositifs aptes à traiter des transactions électroniques, telles que des transactions de paiement ou des transactions de réputation par exemple, ainsi qu'à des procédés pour mettre en oeuvre de telles transactions.

Ci-après des modes de réalisation particuliers de l'invention sont décrits dans le contexte de transactions de paiement réalisés par voie électronique depuis un deuxième dispositif (dit « payeur » ou « débiteur ») vers un premier dispositif (dit « receveur » ou « créditeur »). L'invention permet notamment à un premier dispositif de recevoir de façon sécurisée, en provenance un deuxième dispositif, un paiement dans une monnaie cryptographique (ou cryptomonnaie), c'est-à-dire une monnaie virtuelle utilisable sur un réseau informatique décentralisé.

A noter toutefois que l'invention ne s'applique pas exclusivement à des transactions de paiement et à des dispositifs configurés pour traiter ce type de transaction, mais s'applique plus généralement au traitement de quelconques transactions électroniques permettant de transférer un crédit d'un certain montant et d'une certaine nature depuis un dispositif débiteur vers un autre dispositif créditeur. La nature de ces crédits (valeur numérique) peut être adaptée selon le cas. L'invention s'applique notamment au traitement de transactions de réputation visant à transférer des crédits de réputation, c'est-à-dire des crédits représentatifs d'une réputation associée à un compte (ou à un individu, à un groupe d'individus, à une organisation, etc.). De tels crédits de réputations peuvent par exemple prendre la forme d'un « Like » (« J'aime ») ou d'un score.

L'invention propose notamment un procédé de contrôle (dit aussi « procédé ») mis en oeuvre dans un premier dispositif apte à traiter des transactions en coopération avec un deuxième dispositif, et vise en particulier à assurer une gestion efficace d'une mémoire du premier dispositif, tout en permettant un traitement sécurisé des transactions. Pour ce faire, l'invention propose, selon différents modes de réalisation, un premier dispositif comprenant une première zone mémoire apte à contenir un historique de transaction, cet historique pouvant comprendre une ou des entrées représentatives de transactions traitées par le premier dispositif. Ce procédé de contrôle comprend notamment un traitement d'une transaction courante au cours de laquelle le premier dispositif reçoit des données de transactions en provenance du deuxième dispositif pour verser (ou transférer) un crédit d'un certain montant à un compte associé au premier dispositif. Ce traitement fait en particulier recours à un premier compteur de génération stocké dans une deuxième zone mémoire du premier dispositif. Au cours du traitement de la transaction courante, le premier dispositif vérifie si ce premier compteur de génération coïncide (ou concorde) avec un deuxième compteur de génération fourni par le deuxième dispositif dans les données de transaction. Le procédé de contrôle comprend en outre une étape de gestion de la première zone mémoire au cours de laquelle un processus d'éviction est mis en oeuvre par le premier dispositif de sorte à mettre à jour le premier compteur de génération (par incrémentation, décrémentation, ou autre) et à réaliser une éviction (ou purge) - totale ou partielle - de la première zone mémoire pour libérer de l'espace mémoire.

Comme décrit par la suite, l'invention vise également un premier dispositif de traitement correspondant, un deuxième dispositif de traitement correspondant, un système correspondant comprenant les premier et deuxième dispositifs, ainsi que des programmes d'ordinateur correspondants. D'autres aspects et avantages de la présente invention ressortiront des exemples de réalisation décrits ci-dessous en référence aux dessins mentionnés ci-avant.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Sauf indications contraires, les termes « premier(s) » (ou première(s)), « deuxième(s) », etc. sont utilisés dans ce document par convention arbitraire pour permettre d'identifier et de distinguer différents éléments (tels que des clés, des dispositifs, etc.) mis en oeuvre dans les modes de réalisation décrits ci-après.

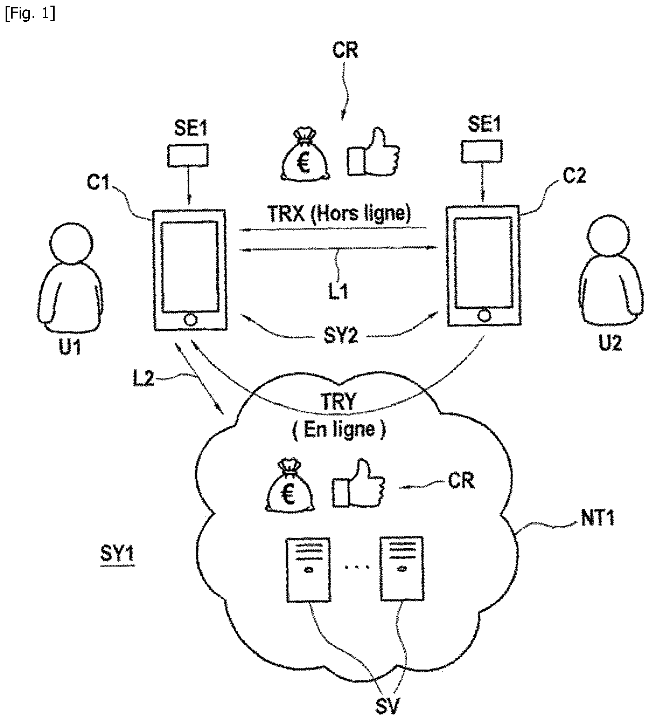

La **figure 1** représente, de manière schématique, un système SY1 comprenant un premier dispositif C1, un deuxième dispositif C2 et un système en ligne NT1 (appelé aussi « Ledger » en anglais) comprenant un ou une pluralité de serveurs SV. Le premier dispositif C1 est apte à traiter des transactions en coopération avec le deuxième dispositif C2. Pour ce faire, le premier dispositif C1 peut recevoir via une liaison de communication L1 des transactions hors ligne TRX (en mode pair à pair), sous la forme de données de transaction visant à transférer ou verser un crédit CR depuis le deuxième dispositif C2 agissant en tant que débiteur, vers le premier dispositif C1 agissant en tant que créditeur, sans faire intervenir le système en ligne NT1.

Le système en ligne NT1 comprend au moins un serveur distant SV configuré pour traiter des transactions en ligne TRY visant à transférer des crédits CR au premier dispositif C1 agissant en tant que dispositif créditeur. Ainsi, le premier dispositif C1 peut coopérer via une deuxième liaison de communication L2 avec le système en ligne NT1 afin de recevoir des crédits CR au cours de transactions en ligne TRY.

Comme déjà indiqué, on suppose par la suite que les crédits CR transférés (ou versés) au premier dispositif C1 (ou plus particulièrement à un compte U1 associé à ce premier dispositif C1) sont des crédits en monnaie cryptographique. La monnaie cryptographique utilisée peut être quelconque (en Ether par exemple), étant entendu que des crédits autres que ceux en cryptomonnaie sont également possibles. En particulier, l'invention permet l'affectation ou le versement de crédits de réputation (par exemple sous la forme de « Like » ou « J'aime », ou sous la forme d'un score ou de points) à un compte associé au premier dispositif C1. Ces crédits CR peuvent être transmis lors d'une transaction de sorte à être versé au compte du premier dispositif C1.

Les premier et deuxième dispositifs C1, C2 forment ensemble un système noté SY2 capable de traiter des transactions hors ligne TRX comme déjà indiqué.

On suppose par la suite que les transactions TRX hors ligne traitées par le premier dispositif C1 en coopération avec le deuxième dispositif C2, ainsi que les transactions TRY en ligne traitées par le premier dispositif C1 en coopération avec le système en ligne NT1, sont des transactions de paiement, telles que par exemple des transactions Ether, bien que d'autres exemples soient possibles.

On suppose dans les exemples de réalisation qui suivent que les premier et deuxième dispositifs C1, C2 (dits aussi dispositifs de traitement) sont des terminaux, tels que des smartphones, tablettes, ordinateurs portables ou équivalents. Ces dispositifs C1 et C2 peuvent toutefois prendre d'autres formes (fixes ou mobiles), telles que notamment des terminaux fixes (serveurs, ...), cartes à puce, clé USB, objets connectés, etc. En variante, l'un au moins parmi les dispositifs C1 et C2 peut notamment être une carte de paiement au format ISO/IEC 7816 ID1 (par exemple le dispositif C2 est une carte de paiement au format ISO/IEC 7816 ID1 tandis que le dispositif C1 est un terminal quelconque apte à coopérer avec cette carte, ou inversement).

Par ailleurs, l'un au moins parmi les terminaux C1, C2 (ou les deux) peut comprendre un élément sécurisé. Dans ce cas, les étapes de traitement des transactions (telles que décrites ultérieurement) sont réalisées par les éléments sécurisés embarqués respectivement par les terminaux C1, C2. Comme défini par l'organisme de standardisation « GlobalPlatform » bien connu de l'homme du métier, un élément sécurisé (pour « secure element ») est une plateforme matérielle et logicielle configurée pour héberger de façon sécurisée des applications et leurs données sensibles associées (clés cryptographiques, algorithmes...), en conformité avec des règles fixées par une autorité tierce de confiance. Un élément sécurisé fournit un environnement d'exécution sécurisé à des applications. Il peut prendre diverses formes, telles qu'un module UICC (pour « Universal Integrated Circuit Card »), un élément sécurisé embarqué (ou « embedded SE » ou encore « eSIM ») ou encore une carte microSD. Un module UICC et une carte microSD sont généralement amovibles. Chaque forme d'élément sécurisé est destinée à être utilisée dans des applications bien particulières et doit répondre à des exigences propres au marché concerné.

Comme représenté en **figure 1,** on suppose à titre d'exemple que les terminaux C1 et C2 embarquent respectivement des éléments sécurisés SE1 et SE2, qui peuvent prendre par exemple ici la forme d'une carte SIM, eSIM, ou autre.

On suppose ici que les liaisons de communication L1 et L2 sont des liaisons sans fil quelconque, bien qu'il soit aussi possible de mettre en oeuvre l'invention avec des liaisons filaires. L'échanges de données entre les dispositifs C1 et C2 peut aussi se faire par l'acquisition de code-barres de type QR code (pour « quick response code »).

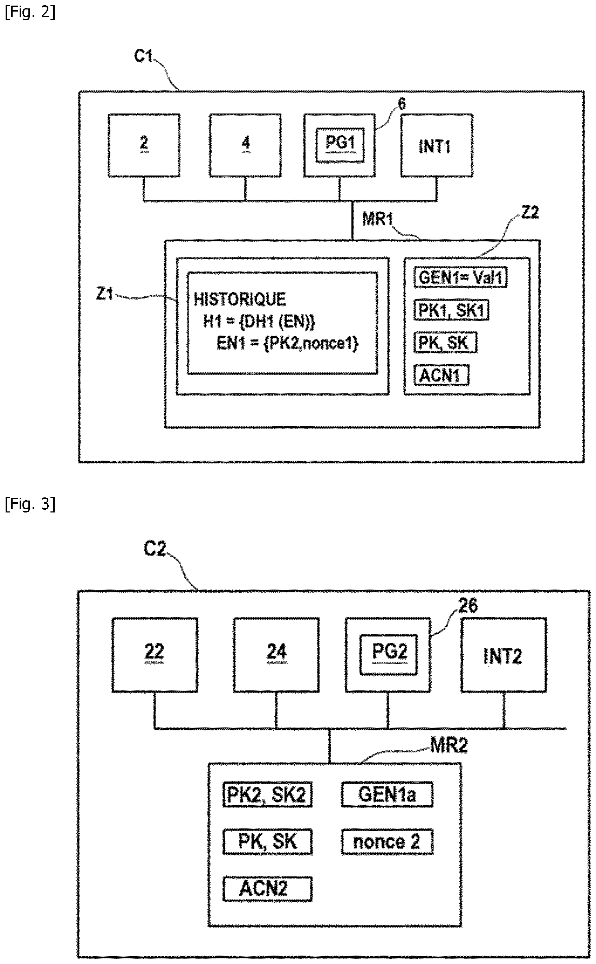

La **figure 2** représente selon un mode de réalisation particulier la structure du premier terminal C1 décrit ci-avant en référence à la **figure 1.** Plus précisément, le terminal C1 comprend dans cet exemple un processeur 2, une mémoire volatile 4, une mémoire non volatile 6, une mémoire non volatile réinscriptible MR1 et une interface de communication INT1.

Selon un exemple particulier, les éléments 2, 4, 6 et MR1 ainsi qu'éventuellement l'interface INT1 sont compris dans l'élément sécurisé SE1 (dans le cas où un tel élément sécurisé est présent).

La mémoire non-volatile 6 (de type Flash, ROM ou autre) constitue dans cet exemple un support d'enregistrement (ou support d'informations) conforme à un mode de réalisation particulier, lisible par le terminal C1, et sur lequel est enregistré un programme d'ordinateur PG1 conforme à un mode de réalisation particulier. Ce programme d'ordinateur PG1 comporte des instructions pour l'exécution des étapes d'un procédé de contrôle selon un mode de réalisation particulier. Les étapes de ce procédé sont décrites ultérieurement, dans des modes de réalisation particuliers de l'invention.

Le processeur 2 contrôle les différents composants (mémoires, interface de communication,...) et utilise la mémoire volatile 4 pour réaliser les différentes opérations et fonctions nécessaires au fonctionnement du premier dispositif C1, y compris pour exécuter le programme d'ordinateur PG1 lors de la mise en oeuvre du procédé de contrôle de l'invention.

Selon un exemple particulier, le processeur 2 est piloté par le programme PG1 pour mettre en oeuvre un porte-monnaie virtuel destiné à réaliser un procédé de contrôle conforme à l'invention. Ce porte-monnaie virtuel peut permettre en particulier de gérer un compte utilisateur U1 associé au terminal C1 et de réaliser des transactions en monnaie cryptographique (par exemple en Ether ou toutes autres crypto-monnaies appropriées) avec un compte tiers U2 associé au terminal C2.

A noter que le terminal C1 peut dans un exemple particulier comprendre plusieurs comptes utilisateurs U1 distincts permettant chacun de recevoir des paiements depuis un compte tiers associé à un dispositif externe tel que le terminal C2.

Dans l'exemple considéré ici, la mémoire non volatile réinscriptible MR1 comprend deux zones mémoire distinctes notées Z1 et Z2. Ces zones mémoires Z1 et Z2 peuvent être formées sur une même mémoire physique MR1 du terminal C1 ou, alternativement, être formées dans des mémoires physiques séparées.

La première zone mémoire Z1 est configurée pour stocker un historique (ou historique de transaction) H1 apte à contenir des données d'historique DH1, notamment sous forme d'entrées EN. L'historique H1 peut ainsi comprendre une ou des entrées EN, chacune de ces entrées EN étant représentative d'une transaction passée traitée par le dispositif C1 et au cours de laquelle un crédit CR a été versé depuis un compte tiers au compte U1 associé au terminal C1.

Plus précisément, chaque entrée EN est associée dans cet exemple à une clé publique d'un dispositif débiteur qui est à l'origine du versement du crédit CR correspondant. Comme décrit par la suite, outre cette clé publique, chaque entrée EN peut également être associée à un identifiant de transaction. Comme représenté en **figure 2,** on suppose dans cet exemple que l'historique H1 se trouve dans un état initial dans lequel il comprend au moins une entrée EN1 associée à une clé publique PK2 du dispositif C2 et à un identifiant de transaction noté nonce1. D'autres exemples de réalisation sont toutefois possibles sans le recours à un tel identifiant de transaction nonce1.

A noter que d'autres paramètres caractérisant des données de transaction peuvent également être inclus dans les données de transaction DH1 bien que cela ne soit pas nécessaire pour mettre en oeuvre l'invention.

Par ailleurs, la deuxième zone mémoire Z2 est configurée pour stocker un premier compteur de génération GEN1 qui est initialement fixé à une valeur initiale Val1 dans cet exemple. Comme cela apparaîtra plus clairement par la suite, la valeur du compteur de génération GEN1 peut être un nombre entier quelconque, ce nombre permettant de sécuriser le traitement de transactions traitées par le terminal C1.

La deuxième zone mémoire Z2 comprend en outre dans cet exemple une première paire de clés cryptographiques PK1/SK1 et une deuxième paire de clés cryptographiques PK/SK. Dans cet exemple, PK1 est une clé publique du terminal C1 tandis que SK1 est une clé privée du terminal C1, ces deux clés étant complémentaires l'une à l'autre. De même, PK est une clé publique de groupe et SK est une clé privée de groupe, ces deux clés étant complémentaires l'une de l'autre et étant associées à un groupe auquel appartiennent les terminaux C1 et C2. D'autres mises en oeuvre de l'invention sont toutefois possibles notamment sans avoir recours aux clés de groupe PK et SK.

Dans ce document, les clés mentionnées sont des clés cryptographiques. Une clé est dite « privée » lorsqu'elle est secrète, par opposition à une clé publique.

Le terminal C1 (par exemple son porte-monnaie virtuel) peut utiliser les clés PK1/SK1 et PK/SK du compte utilisateur U1 pour signer des données de transaction ou vérifier la signature de données de transaction lors du traitement de transactions.

Selon un exemple particulier, la paire de clés PK1/SK1 (et éventuellement la paire de clés PK/SK) est calculée à la volée par le terminal C1 à partir d'une donnée (appelée « graine », ou « seed » en anglais ; non représentée sur la figure) qui peut être stockée dans la deuxième zone mémoire Z2.

Dans cet exemple, la deuxième zone mémoire Z2 comprend également un solde de compte ACN1 associé au compte U1 du terminal C1. Ce solde de compte ACN1 est un paramètre qui spécifie un solde courant du compte U1 associé au terminal C1. Ce solde peut notamment être crédité d'un montant lorsqu'un crédit CR est versé sur le compte U1 (ou encore peut être débité d'un montant lorsqu'un crédit est prélevé et versé depuis le compte U1 vers un compte tiers tel que le compte U2).

La **figure 3** représente selon un mode de réalisation particulier la structure du deuxième terminal C2 décrit ci-avant en référence à la **figure 1.** Plus précisément, le terminal C2 comprend dans cet exemple un processeur 22, une mémoire volatile 24, une mémoire non volatile 26, une mémoire non volatile réinscriptible MR2 et une interface de communication INT2.

La mémoire non-volatile 26 (de type Flash, ROM ou autre) constitue dans cet exemple un support d'enregistrement (ou support d'informations) conforme à un mode de réalisation particulier, lisible par le terminal C2, et sur lequel est enregistré un programme d'ordinateur PG2 conforme à un mode de réalisation particulier. Ce programme d'ordinateur PG2 comporte des instructions pour l'exécution des étapes d'un procédé de contrôle selon un mode de réalisation particulier en coopération avec le terminal C1. Les étapes de ce procédé sont décrites ultérieurement, dans des modes de réalisation particuliers de l'invention.

Selon un exemple particulier, les terminaux C1 et C2 présentent une structure analogue et sont configurés de façon analogue de sorte que les terminaux C1 et C2 peuvent coopérer ensemble pour réaliser des versements hors ligne depuis C2 vers C1 et inversement, bien que d'autres mises en oeuvre soient possibles (dans lesquels par exemple le terminal C1 n'est configuré que pour recevoir des crédits CR tandis que le terminal C2 n'est configuré que pour verser des crédits).

Par souci de simplicité, seuls certains éléments utiles à la description de l'invention ont été représentés en **figure 3** et décrits dans ce document.

On suppose dans cet exemple que le terminal C2 comprend dans sa mémoire non volatile MR2 une première paire de clés cryptographiques PK2/SK2 et une deuxième paire de clés cryptographiques PK/SK. Dans cet exemple, PK2 est une clé publique du terminal C2 tandis que SK2 est une clé privée du terminal C2, ces deux clés étant complémentaires l'une à l'autre. De même, PK et SK sont respectivement la clé publique de groupe et la clé privée de groupe dont dispose le terminal C2 (au même titre que le terminal C1) en tant que membre d'un groupe comprenant les terminaux C1 et C2. Comme déjà indiqué, des modes de réalisation sont toutefois possibles sans notamment l'usage des clés de groupe PK/SK.

Dans cet exemple, la mémoire non volatile MR2 peut également contenir un identifiant de transaction nonce2 attribué par le deuxième dispositif C2 à une transaction courante.

La mémoire non volatile MR2 du terminal C2 peut également contenir un solde de compte ACN2 associé au compte U2 du terminal C2. De même que pour ACN1, le solde de compte ACN2 est un paramètre qui spécifie un solde courant du compte U2 associé au terminal C2. Ce solde peut notamment être débité d'un montant lorsqu'un crédit CR est transféré depuis le compte U2 vers un compte tiers tel que le compte U1 (ou encore peut être crédité d'un montant lorsqu'un crédit est reçu sur le compte U2).

Bien que cela ne soit pas représenté, la mémoire MR2 peut également stocker d'autres éléments, tels qu'un compteur de génération noté GEN1a associé au terminal C1. Comme décrit ci-après, si les terminaux C1 et C2 sont synchronisés, le compteur de génération GEN1a stocké dans la mémoire MR2 du terminal C2 est identique au compteur de génération GEN1 stocké dans la deuxième zone mémoire Z2 du terminal C1. Si en revanche les terminaux C1 et C2 sont désynchronisés, le compteur de génération GEN1a stocké dans la mémoire MR2 du terminal C2 est différent du compteur de génération GEN1 stocké dans la deuxième zone mémoire Z2 du terminal C1.

Le terminal C1 et le terminal C2 sont configurés pour utiliser leurs interfaces de communication respectives INT1, INT2 afin de communiquer ensemble. Ainsi, les interfaces de communication INT1 et INT2 peuvent être configurées pour établir une liaison de communication L1 hors ligne (en mode pair à pair, c'est-à-dire qui ne passe pas par le système en ligne NT1, comme déjà indiqué). La liaison de communication L1 peut être par exemple une liaison sans fil (Bluetooth, wifi, NFC, etc.) ou une liaison filaire.

A noter que le système SY2, et plus particulièrement les dispositifs C1 et C2 représentés en **figures 1-3,** ne constituent que des exemples de réalisation particuliers, d'autres mises en oeuvre étant possibles dans le cadre de l'invention. L'homme du métier comprend en particulier que certains éléments du terminal C1 représenté en **figure 2** et du terminal C2 représenté en **figure 3** ne sont décrits ici que pour faciliter la compréhension de l'invention, ces éléments n'étant pas nécessaires pour mettre en oeuvre l'invention.

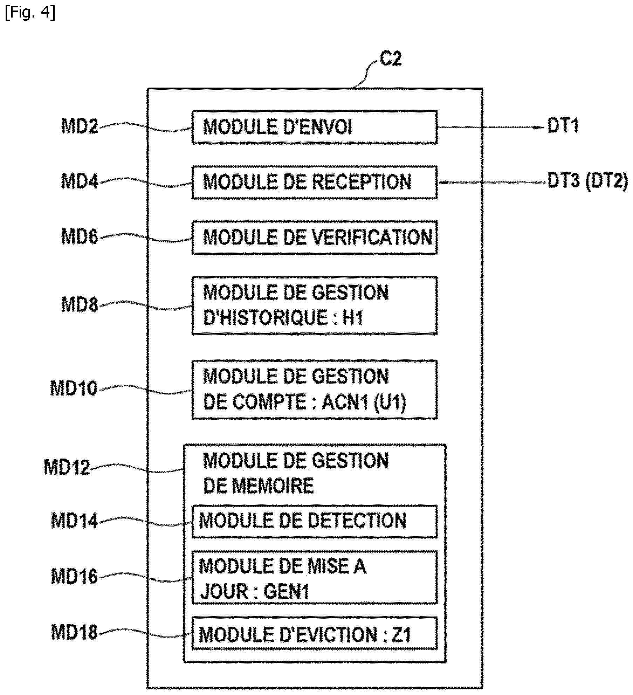

Par ailleurs, la **figure 4** représente, selon un mode de réalisation particulier, des modules mis en oeuvre par le processeur 2 piloté par le programme d'ordinateur PG1 au sein du terminal C1. Ces modules comprennent un module de réception MD4, un module de vérification MD6, un module de gestion d'historique MD8, un module de gestion de compte MD10 et un module de gestion de mémoire MD12. Selon un exemple particulier, le processeur 2 piloté par le programme PG1 met également en oeuvre un module d'envoi MD2, bien que des modes de réalisation sans notamment ce module soient possibles.

Plus particulièrement, le module de réception MD4 est configuré pour recevoir, au cours d'une transaction courante, des premières données DT3 en provenance du deuxième dispositif C2. Ces premières données DT3 comprennent des deuxièmes données DT2 qui peuvent elles-mêmes comprendre : la clé publique PK2 du deuxième dispositif C2, un montant MT1a du crédit CR1 à créditer (ou verser) lors de la transaction courante, un compteur de génération GEN1a et un premier identifiant de transaction nonce2 attribué par le deuxième dispositif C2 à la transaction courante.

Selon un exemple particulier, le premier identifiant de transaction nonce2 attribué par le deuxième terminal C2 est un compteur représentatif d'un nombre courant de transactions réalisés par le deuxième terminal C2.

Comme décrit par la suite, des modes de réalisation particulier sont possibles dans lesquels les données DT3 comprennent, outre les données DT2, des signatures.

Le module de vérification MD6 est configuré pour vérifier que le premier compteur de génération GEN1 stocké dans la zone mémoire Z2 et le deuxième compteur de génération GEN1a reçu ont des valeurs qui coïncident. Dans l'affirmative, le module de vérification MD6 est configuré pour vérifier dans la première zone mémoire Z1 que l'historique H1 comprend une entrée EN associée à la clé publique PK2 du deuxième dispositif C2. Si l'historique H1 ne comprend aucune une entrée EN associée à la clé publique PK2 du deuxième dispositif C2, le module de vérification MD6 est configurée pour accepter la transaction courante.

Dans le cas contraire (une entrée EN est détectée), le module de vérification MD6 est configuré pour vérifier que le premier identifiant de transaction nonce2 satisfait une première condition prédéterminée (notée CD1) indiquant l'unicité de la transaction courante. Dans ce cas, s'il est détecté que la première condition est satisfaite, le module de vérification MD6 est configuré pour accepter la transaction courante.

Par ailleurs, si la transaction courante est acceptée :

- le module de gestion d'historique MD8 est configuré pour stocker (ou enregistrer) dans l'historique H1 une nouvelle entrée EN associée à la clé publique PK2 du deuxième dispositif C2 ; et
- le module de gestion de compte MD10 est configuré pour mettre à jour le solde de compte ACN1 dans la deuxième zone mémoire Z2 de sorte à verser le montant du crédit au compte U1 associé au premier dispositif C1.

En outre, le module de gestion de mémoire MD12 comprend un module de détection MD14, un module de mise à jour MD16 et un module d'éviction MD18. Plus particulièrement, le module de détection MD14 est configuré pour détecter que l'espace occupé dans la première zone mémoire Z1 satisfait une deuxième condition prédéterminée (notée CD2) indiquant un risque de saturation (prochaine ou imminente) de la première zone mémoire Z1. En réponse à cette détection, le module de gestion de mémoire MD12 est configuré pour réaliser un processus d'éviction au cours duquel :

- le module de mise à jour MD16 met à jour le premier compteur de génération GEN1 dans la deuxième zone mémoire Z2 du dispositif C1 de sorte à assigner au premier compteur de génération GEN1 une nouvelle valeur (notée Val2) différente de la valeur initiale Val1; et
- le module d'éviction MD18 réalise une éviction (autrement dit, vide) au moins une partie de la première zone mémoire Z1 afin de libérer de l'espace mémoire.

Le fonctionnement et la configuration des modules MD2-MD18 du dispositif C1 apparaîtront plus précisément dans les exemples de réalisation décrits ci-après. A noter également que les modules MD2-MD18 tels que représentés en **figure 4** ne constituent qu'un exemple de mise en oeuvre de l'invention.

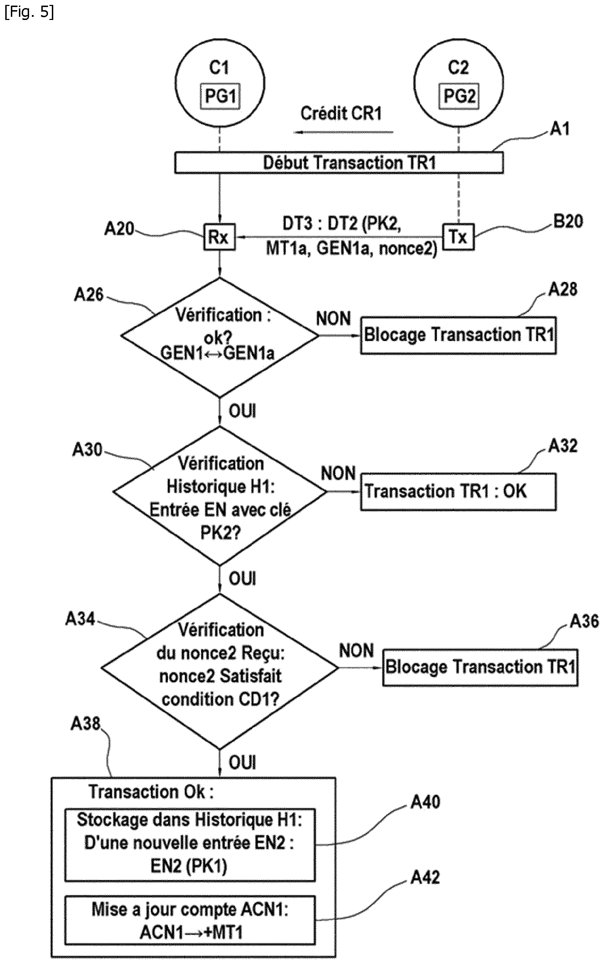

Un mode de réalisation particulier de l'invention est à présent décrit en référence aux **figures 5-6.** Plus précisément, le terminal C1 représenté en **figures 1, 2** et **4** exécute le programme d'ordinateur PG1 pour mettre en oeuvre un procédé de contrôle selon un mode de réalisation particulier. De même, le terminal C2 représenté en **figures 1** et **3** exécute le programme d'ordinateur PG2 pour mettre en oeuvre un procédé de contrôle collectivement avec le terminal C1, selon un mode de réalisation particulier.

On suppose dans cet exemple qu'un utilisateur utilise le terminal C1 pour recevoir un crédit CR1 en provenance du terminal C2 d'un autre utilisateur au cours d'une transaction courante TR1 hors ligne (en mode pair à pair, c'est-à-dire sans que le système en ligne NT1 ne fasse l'intermédiaire entre les terminaux C1 et C2 pour traiter la transaction courante TR1). Comme déjà indiqué, il s'agit ici d'une transaction de paiement destinée à verser un crédit CR1 en monnaie cryptographique (en Ether ou autre) depuis le compte U2 associé au terminal C2 au compte U1 du terminal C1. Une telle transaction est réalisée par exemple lorsqu'un marchant utilisant le terminal C1 tente de recevoir un paiement depuis un client utilisant le terminal C2. Pour ce faire, le terminal C1 coopère avec le terminal C2 afin d'échanger des données nécessaires à l'exécution de la transaction TR1.

Comme représenté en **figure 5,** on suppose que la transaction courante TR1 entre le terminal C1 et le terminal C2 est initiée au cours d'une étape d'initiation A1.

Au cours d'une étape B20 d'envoi, le terminal C2 envoie des premières données de transaction DT3 qui sont reçues en A20 par le terminal C1. Comme décrit ci-après, le terminal C2 envoie en B20 ces données DT3 pour causer le versement d'un montant MT1a du crédit CR1 au compte U1 associé au terminal C1.

Plus particulièrement, les premières données de transaction DT3 comprennent des deuxièmes données DT2 et peuvent éventuellement comprendre aussi d'autres données qui seront décrites ultérieurement dans un exemple particulier. Les deuxièmes données DT2 comprennent :

- une clé publique PK2 du terminal C2,
- un montant MT1a du crédit CR1 à créditer (ou verser) lors la transaction courante TR1,
- un compteur de génération GEN1a, et
- un premier identifiant de transaction nonce2 attribué par le deuxième terminal C2 à la transaction courante TR1.

Selon un exemple particulier, le premier identifiant de transaction nonce2 attribué par le deuxième terminal C2 est un compteur représentatif d'un nombre courant de transactions réalisés par le deuxième terminal C2 pour verser un crédit CR respectif.

A noter que la manière dont le terminal C2 fait l'acquisition (obtient) au préalable de ces deuxièmes données DT2 peut varier selon le cas, certains exemples particuliers étant décrits ultérieurement.

Au cours d'une étape A26 de vérification, le terminal C1 vérifie que le compteur de génération GEN1a reçu en A20 dans les données DT2 coïncide (ou concorde) avec le compteur de génération GEN1 stocké dans sa deuxième zone mémoire Z2. Pour ce faire, le terminal C1 compare la valeur du compteur de génération GEN1a avec la valeur initiale Val1 du compteur de génération GEN1. Dans cet exemple, le terminal C1 vérifie si les compteurs GEN1 et GEN1a sont identiques. A cette fin, le terminal C1 peut, préalablement à l'étape A26 de vérification, consulter sa deuxième zone mémoire Z2 pour déterminer le compteur de génération GEN1 à un instant courant au cours duquel est traitée la transaction courante TR1.

Si le résultat de la vérification A26 est négatif (GEN1 et GEN1a ne coïncident pas), le terminal C1 bloque (A28) ou refuse (ou rejette) la transaction TR1.

Si en revanche le résultat de la vérification A26 est positif (GEN1 et GEN1a coïncident), le terminal C1 vérifie (A30) dans la première zone mémoire Z1 que l'historique H1 comprend une entrée EN associée à la clé publique PK2 du deuxième terminal C2.

Si le résultat de la vérification A30 est négatif (pas d'entrée EN détectée), le terminal C1 accepte (A32) la transaction courante TR1. L'absence d'entrée EN associée à la clé publique PK2 dans l'historique H1 signifie que le terminal C1 n'a aucune connaissance d'une quelconque ancienne transaction au cours de laquelle il aurait reçu un paiement depuis le terminal C2.

Dans le cas contraire (une telle entrée EN est détectée), le terminal C1 vérifie (A34) que le premier identifiant de transaction nonce2 satisfait une première condition prédéterminée CD1 indiquant l'unicité de la transaction courante TR1. Autrement dit, cette vérification A34 permet de déterminer si la transaction courante TR1 est unique du point de vue du terminal C1 ou si, au contraire, le terminal C1 a déjà traité précédemment cette même transaction TR1, correspondant au même paiement, avec le terminal C2. Pour ce faire, le terminal C2 attribue un identifiant de transaction unique (noté généralement « nonce ») pour chaque nouvelle transaction qu'il traite lors d'un paiement à destination d'un terminal tiers. Dans cet exemple particulier, le terminal C1 peut ainsi vérifier, à partir de l'identifiant de transaction nonce2 reçu en A20, que la transaction courante TR1 constitue bien une nouvelle transaction et non une ancienne transaction déjà réalisée avec le terminal C2.

Comme décrit ultérieurement, le terminal C1 peut vérifier en A34 l'identifiant de transaction nonce2 de diverses manières. La condition prédéterminée CD1 peut ainsi être adaptée selon le cas. A titre d'exemple, le terminal C1 peut comparer l'identifiant de transaction nonce2 à au moins un identifiant de transaction précédemment enregistré dans sa zone mémoire Z2.

Selon un exemple particulier, on suppose que l'entrée EN1 associée à la clé publique PK2 du terminal C1 est détectée lors de la vérification A30 dans l'historique H1 stocké dans la première zone mémoire Z1. Cette entrée d'historique EN1 est représentative d'une (ou d'au moins une) transaction passée au cours de laquelle le même terminal C2 à verser un crédit CR au terminal C1. Autrement dit, la présence de cette entrée EN1 signifie que le terminal C1 a connaissance d'une transaction passée au cours de laquelle il a reçu un paiement du terminal C2.

Cette entrée EN1 détectée en A30 peut en outre comprendre un deuxième identifiant de transaction nonce1 qui identifie la plus récente transaction (autre que la transaction courante TR1) au cours de laquelle un crédit CR a été reçu par le terminal C1 en provenance du terminal C2. De même que pour l'identifiant de transaction nonce2, l'identifiant de transaction nonce1 peut être un compteur de transaction qui été préalablement attribué par le terminal C2 à cette ancienne transaction et envoyé par le terminal C2 au terminal C1 au cours de ladite ancienne transaction.

Ainsi, la condition prédéterminée CD1 peut être définie à parti du compteur de transaction nonce1 préenregistré dans l'entrée d'historique H1 en association avec la clé publique PK2. A titre d'exemple, la condition CD1 est remplie si les identifiants nonce1 et nonce2 sont différents. Selon un autre exemple, les identifiants de transaction nonce1 et nonce2 sont des compteurs et la condition CD1 est remplie si nonce2 > nonce1.

Si le résultat de la vérification A34 est négatif (l'identifiant nonce2 ne remplit pas la condition CD1), le terminal C1 bloque (A36) ou rejette la transaction courante TR1, car cela signifie que le terminal C2 (ou un autre dispositif se faisant passer pour le terminal C2) tente de réitérer une transaction pour verser des crédits CR1 qui ont déjà été versés par le terminal C2 au terminal C1.

Si, en revanche, le résultat de la vérification A34 est positif (l'identifiant nonce2 remplit la condition CD1), le terminal C1 accepte (A38) la transaction courante TR1 et réalise une étape A40 de stockage et une étape A42 de mise à jour (**figure 5**) au cours du traitement de la transaction courante TR1.

Plus particulièrement, au cours de l'étape A40 de stockage, le terminal C1 stocke (ou enregistre) dans l'historique H1 une nouvelle entrée EN2 associée à la clé publique PK2 du deuxième terminal C2. Cette nouvelle entrée EN2 peut remplacer l'ancienne entrée EN1, dans un cas par exemple où le terminal C1 ne conserve qu'une seule entrée EN dans l'historique H1 pour chaque dispositif débiteur depuis lequel il reçoit un crédit CR au cours d'une transaction. Ce remplacement peut s'effectuer par une mise à jour causant la conversion de l'ancienne entrée EN1 en la nouvelle entrée EN2. En variante, l'ancienne entrée EN1 est conservée dans l'historique H1 en plus de la nouvelle entrée EN2. Autrement dit, la nouvelle entrée EN2 est ajoutée dans l'historique H1 en tant qu'entrée la plus récente en association avec la clé publique PK2 du terminal C2, sans nécessairement écraser l'ancienne entrée EN1.

Cette nouvelle entrée EN2 peut être associée, non seulement à la clé publique PK2 du deuxième terminal C2, mais également à l'identifiant de transaction nonce2 reçu en A20 depuis le terminal C2. Cet identifiant de transaction nonce2 pourra éventuellement être utilisé par le terminal C1 lors d'une prochaine transaction au cours de laquelle le terminal C2 tente de réaliser un versement de crédit CR au terminal C1 (comme décrit ci-avant en référence à l'étape A34 (**figure 5**).

En outre, au cours de l'étape A42 de mise à jour, le terminal C1 met à jour le solde de compte ACN1 stocké dans la deuxième zone mémoire Z2, de sorte à verser le montant MT1a du crédit CR1 au compte U1 associé au premier terminal C1. Cette mise à jour revient par exemple à incrémenter le solde ACN1 du montant MT1a.

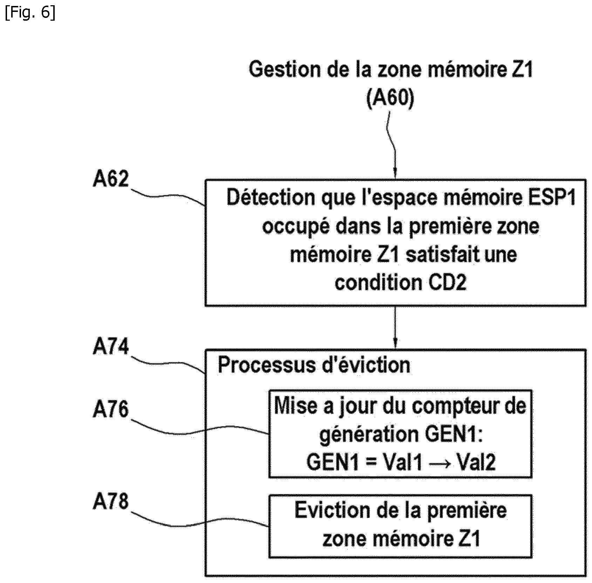

Par ailleurs, la **figure 6** représente une étape A60 de gestion de la première zone mémoire Z1, cette étape comprenant une étape A62 de détection et un processus d'éviction A74. Comme indiqué par la suite, cette étape de gestion A60 peut être déclenchée à divers moment, en réponse à un évènement déclencheur détecté en A62.

En particulier, l'étape de gestion A60 peut être réalisée avant le début de la transaction TR1, ou après achèvement du traitement de la transaction TR1, selon le moment où l'évènement déclencheur est détecté. L'étape de gestion A60, peut également avoir lieu pendant la transaction courante à l'exception des instants suivants :

- Entre, et pendant, l'étape de consultation de la deuxième zone mémoire (Z2) pour déterminer le premier compteur de génération (GEN1) à un instant courant au cours duquel est traitée la transaction courante et l'étape A30, si le test de l'étape A26 est positif.
- Entre, et pendant, l'étape de consultation de la deuxième zone mémoire (Z2) pour déterminer le premier compteur de génération (GEN1) à un instant courant au cours duquel est traitée la transaction courante et l'étape A26, si le test de l'étape A26 est négatif.
- Entre, et pendant, l'étape de consultation de la deuxième zone mémoire (Z2) pour déterminer le premier compteur de génération (GEN1) à un instant courant au cours duquel est traitée la transaction courante et l'étape A40.

En fonction du moment où cette étape de gestion A60 est réalisée, l'issue du traitement de la transaction courante TR1 peut varier, plus particulièrement en ce qui concerne le résultat de la vérification A26 qui vise à déterminer si le compteur de génération GEN1 courant stocké dans la deuxième zone mémoire Z2 coïncide avec le compteur de génération GEN1a fourni en A20 pas le terminal C2.

Plus précisément, comme représenté en **figure 6,** le terminal C1 détecte au cours d'une étape A62 de détection que l'espace - noté ESP1 - occupé dans la première zone mémoire Z1 satisfait une deuxième condition prédéterminée CD2 indiquant un risque de saturation (prochaine ou imminente) de la première zone mémoire Z1 (évènement déclencheur). Le terminal C1 peut vérifier périodiquement, ou à certains instants prédéfinis (par exemple lors de chaque transaction traitée) si la condition CD2 est satisfaite.

La condition prédéterminée CD2 peut être adaptée par l'homme du métier selon les besoins en espace mémoire propres à chaque cas d'usage, et en fonction par exemple de la taille de la zone mémoire Z1. La condition CD2 peut par exemple définir un seuil prédéterminée TH au-delà duquel l'espace occupé ESP1 dans la zone mémoire est considéré comme étant critique et donc comme constituant un risque de saturation de la zone mémoire Z1. Selon un exemple particulier, le terminal C1 détecte en A62 un risque de saturation de la zone mémoire Z1 si l'espace occupé ESP1 atteint au moins une valeur seuil TH, cette valeur pouvant être égale par exemple à un ratio (ou portion) prédéterminé de la taille totale de la zone mémoire Z1.

En réponse à la détection en A62 que la première zone mémoire Z1 risque d'être saturée, le terminal C1 réalise un processus d'éviction A74 comprenant une mise à jour A76 et une éviction A78.

Plus précisément, au cours de l'étape A76 de mise à jour, le terminal C1 met à jour le premier compteur de génération GEN1 dans la deuxième zone mémoire Z2 de sorte à assigner au premier compteur de génération GEN1 une nouvelle valeur - notée Val2 - différente de la valeur initiale Val1. Cette mise à jour A76 peut consister par exemple à incrémenter (ou à décrémenter) la valeur du compteur de génération GEN1 stocké dans la zone mémoire Z2.

Selon un exemple particulier, le terminal C1 assigne au compteur de génération GEN1 une nouvelle valeur Val2 qui diffère de toute autre précédente valeur assignée dans le passé au compteur de génération GEN1. Un mécanisme d'affectation aléatoire est aussi possible.

En outre, au cours de l'étape A78 d'éviction, le terminal C1 réalise une éviction (ou purge) d'au moins une partie de la première zone mémoire Z1 (voire de la totalité de la zone mémoire Z1) afin de libérer de l'espace mémoire. Autrement dit, le terminal supprime tout, ou une partie seulement, du contenu de la zone mémoire Z1, afin de libérer de l'espace mémoire. Selon un exemple particulier, l'éviction A78 comprend une purge (ou suppression) de tout ou partie de l'historique H1 stocké dans la zone mémoire Z1.

La mise à jour A76 (**figure 6**) du premier compteur de génération GEN1 cause un blocage (ou rejet) de toutes transactions, traitées par le terminal C1, pour lesquelles le deuxième compteur de génération GEN1a reçu en A20 (**figure 5**) a une valeur qui diffère de la nouvelle valeur Val2 attribué en A76 au compteur de génération GEN1.

En particulier, lors de la vérification A26 (**figure 5**), le premier terminal C1 peut déterminer que les premier et deuxième compteurs de génération GEN1 et GEN1a ont des valeurs qui ne coïncident pas si le deuxième compteur de génération GEN1a reçu dans les données DT2 en A20 a une ancienne valeur fixée par le premier terminal C1 antérieurement à une précédente mise à jour (par exemple la dernière mise à jour) du compteur de génération GEN1, c'est-à-dire antérieurement à une précédente occurrence de la mise à jour A76 lors du traitement d'une précédente transaction (**figure 6**). La non concordance (ou désynchronisation) des compteurs de génération GEN1 et GEN1a conduit alors le terminal C1 à bloquer (ou rejeter) la transaction courante TR1 en A28 comme déjà décrit ci-avant en référence à la **figure 5.**

L'invention permet de gérer efficacement la mémoire du terminal C1, sans compromette la sécurité des transactions réalisées. En effet, l'historique de transaction H1 augmente en taille au fur et à mesure que de nouveaux crédits sont reçus par le terminal C1. L'étape A60 de gestion (**figure 6**) permet de libérer si nécessaire de l'espace mémoire dans la première zone mémoire Z1, c'est-à-dire lorsqu'un risque de saturation de cette zone mémoire est détecté, de sorte à ce qu'il y ait toujours un espace mémoire suffisant pour enregistrer un historique récent de transactions.

Pour ce faire, un processus d'éviction est réalisé pour supprimer tout ou partie de la zone mémoire Z1 sur détection que cette mémoire Z1 risque d'être prochainement saturée. En supprimant en particulier tout ou partie de l'historique H1, on peut éviter d'atteindre la saturation de la zone mémoire Z1, ce qui entraînerait des difficultés de fonctionnement du terminal C1. Ce mécanisme d'éviction (ou de purge) de la mémoire est d'autant plus utile que les ressources en mémoires peuvent être relativement limitées dans certains types de dispositifs C1, tels que des terminaux mobiles, cartes à puce, etc.

En outre, la gestion de la première zone mémoire Z1 est réalisée en A60 tout en garantissant la sécurité des transactions, y compris celles réalisées en mode hors ligne par le dispositif C1 avec des dispositifs externes tels que le dispositif C2. En particulier, l'invention permet d'éviter les doubles paiements, et plus généralement de garantir qu'un même dispositif débiteur ne puisse pas verser plusieurs fois des mêmes crédits à un dispositif créditeur. En effet, la purge de la zone mémoire Z1 entraîne une perte partielle ou totale de l'historique H1, de sorte qu'il n'est pas toujours possible pour le terminal C1 de se fier à l'historique H1 lors du traitement d'une transaction en cours.

Aussi, pour pallier au problème de la perte d'historique, l'invention introduit l'usage de compteurs de génération comme décrit ci-avant. Ainsi, à chaque fois qu'une éviction de la zone mémoire Z1 est réalisée (A78, **figure 6**), le terminal C1 attribue (A76) également une nouvelle valeur au compteur de génération GEN1. Une fois que la mise à jour A76 (**figure 6**) a été réalisée, le terminal C1 peut transmettre le compteur de génération GEN1 à jour (GEN1 = Val2) au terminal C2 afin que celui-ci puisse l'utiliser pour réaliser un versement. Le terminal C2 peut en variante obtenir le compteur de génération à jour selon d'autres manières appropriées.

Un dispositif externe tel que le terminal C2 ne peut ainsi opérer avec succès un versement d'un crédit CR au terminal C1 que s'il dispose du compteur de génération à jour associé au terminal C1. Si le terminal C2 fournit en B20 (**figure 5**) au terminal C1 un compteur de génération GEN1a qui diffère du compteur de génération GEN1 à jour (c.-à-d. si GEN1a ≠ val2), alors la transaction est refusée (A28). Si en revanche les compteurs GEN1 et GEN1a coïncident (GEN1 = GEN1a), alors le terminal C1 peut consulter en A30 son historique H1 pour vérifier s'il existe une entrée EN associée à la clé publique PK2.

L'usage de l'historique H1 permet donc de sécuriser les transactions et notamment d'empêcher les doubles-paiements (en envoyant plusieurs fois les mêmes données de transaction depuis un même dispositif C2). En outre, l'usage des compteurs de génération permet, en cas de purge de l'historique H1 dans le terminal C1, de garantir qu'un dispositif débiteur C2 ne puisse pas utiliser des données de transaction qui ont déjà servi à transférer un crédit CR depuis le dispositif débiteur C2 vers le terminal C1 lors d'une transaction antérieure à la purge, alors que cette transaction antérieure n'apparaît plus dans l'historique H1 en raison de la purge. Grâce à l'invention, si le terminal C2 tente de verser un crédit CR lors d'une transaction courante en utilisant un compteur de génération qui est antérieur à une purge de la zone mémoire Z1, le terminal C1 bloque la transaction dans la mesure où l'historique H1 stocké dans la première zone mémoire Z1 n'est pas fiable pour traiter cette transaction courante (que cet historique H1 soit vide ou non).

Selon une première variante, lors du processus d'éviction A74 (**figure 6**), le terminal C1 réalise en concomitance (ou simultanément) la mise à jour A76 du compteur de génération GEN1 et l'éviction A78 de la zone mémoire Z1. Autrement dit, la mise à jour A76 et l'éviction A78 sont réalisées de façon atomique, ce qui a pour effet que ces étapes A76 et A78 ne sont effectives que si elles sont réalisées toutes les deux lors du processus d'éviction A74. Selon une deuxième variante, l'éviction A78 est réalisée après la mise à jour A76 du compteur de génération GEN1. Ces deux variantes de réalisation permettent de renforcer encore davantage la sécurité du terminal C1 en empêchant une faille de sécurité qui pourrait se produire si le processus d'éviction A74 était suspendu (par exemple en raison d'une coupure d'alimentation) alors que l'éviction A78 de la zone mémoire Z1 a été exécutée sans que le compteur de génération GEN1 n'ait été mis à jour (A76).

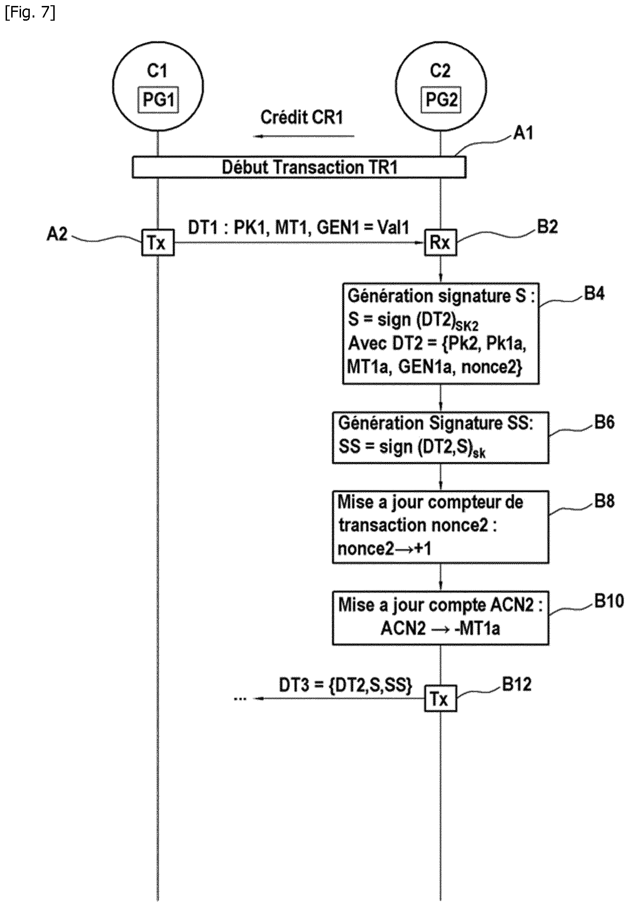

Un mode de réalisation particulier de l'invention est à présent décrit en référence aux **figures 7-9**. Plus précisément, le terminal C1 représenté en **figures 1, 2 et 4** exécute le programme d'ordinateur PG1 pour mettre en oeuvre un procédé de contrôle selon un mode de réalisation particulier. De même, le terminal C2 représenté en **figures 1** et **3** exécute le programme d'ordinateur PG2 pour mettre en oeuvre un procédé de contrôle collectivement avec le terminal C1, selon un mode de réalisation particulier.

On suppose également dans cet exemple qu'un utilisateur utilise le terminal C1 pour recevoir un crédit CR1 en provenance du terminal C2 d'un autre utilisateur au cours d'une transaction courante TR1. Comme déjà indiqué, il s'agit ici d'une transaction de paiement destinée à verser un crédit CR1 en monnaie cryptographique (en Ether ou autre) depuis le compte U2 associé au terminal C2 au compte U1 du terminal C1. Une telle transaction est réalisée par exemple lorsqu'un marchant utilisant le terminal C1 tente de recevoir un paiement depuis un client utilisant le terminal C2. Pour ce faire, le terminal C1 coopère avec le terminal C2 afin d'échanger des données nécessaires à l'exécution de la transaction TR1.

Comme représenté en **figure 7**, on suppose que la transaction courante TR1 entre le terminal C1 et le terminal C2 est initiée en A1 selon une quelconque manière appropriée. Le terminal C1 réalise ensuite un traitement de la transaction TR1 (étapes A2-A42) en coopérant avec le terminal C2 via la liaison de communication L1 (**figure 1**).

Plus précisément, au cours d'une étape A2 d'envoi, le premier terminal C1 envoie au deuxième terminal C2 des données DT1 pour demander le versement par le deuxième terminal C2 d'un crédit CR1 du montant MT1 au compte U1 associé au premier terminal C1, ces données DT1 comprenant le compteur de génération GEN1 fixé à la valeur initiale Val1. Autrement dit, les données DT1 envoyées en A2 comprennent le montant demandé MT1 et le compteur de génération GEN1. Pour ce faire, le terminal C1 peut, préalablement à l'étape A2 d'envoi, consulter sa deuxième zone mémoire Z2 pour déterminer le compteur de génération GEN1 à un instant courant au cours duquel est traitée la transaction courante TR1.

Comme représenté en **figure 7**, les premières données DT1 peuvent éventuellement comprendre également la clé publique PK1 du terminal T1.

Le deuxième terminal C2 reçoit les premières données DT1 en B2 (**figure 7**).

A noter que le compteur de génération GEN1 fourni en A2 par le terminal C1 est à jour, dans le sens où il s'agit de celui couramment stocké dans la zone mémoire Z2 au moment de la transaction courante TR1. La fourniture du compteur de génération GEN1 en A2 au terminal C2 permet à ce dernier de réaliser le transfert de crédit. Toutefois, d'autres exemples sont possibles dans lesquels le terminal C2 obtient le compteur de génération GEN1 selon une autre manière. Par exemple, le terminal C2 peut recevoir ce compteur depuis un autre terminal ou serveur (par exemple depuis le système en ligne NT1). En variante, un utilisateur peut entrer le compteur de génération GEN1 dans le terminal C2 via une interface utilisateur.

Selon une variante de réalisation, le terminal C1 envoie à un terminal externe (par exemple au système en ligne NT1) le premier compteur de génération GEN1 de sorte à ce qu'il soit accessible par le terminal C2.

De même, des variantes sont possibles dans lesquelles le terminal C1 ne fournit pas en A2 (**figure 7**) au moins l'un parmi la clé publique PK1 et le montant demandé MT1. On peut ainsi envisager que le terminal C2 obtienne la clé publique PK1 et/ou le montant demandé MT1 d'une autre manière. Le terminal C2 peut par exemple disposer en mémoire de la clé publique PK1, par exemple parce qu'il a déjà traité une transaction dans le passé avec le terminal C1. On peut aussi envisager qu'un utilisateur entre dans le terminal C2 le montant souhaité MT1 via une interface utilisateur.

Au cours d'une étape B4 de génération, le terminal C2 calcule une signature S à partir de deuxièmes données DT2. Plus précisément, dans cet exemple le terminal C2 génère (B4) la première signature S à partir des deuxièmes données DT2 en utilisant la clé privée SK2 du terminal C2. Autrement dit, le terminal C2 signe les deuxièmes données DT2 au moyen de la clé privée SK2 de sorte à produire la première signature S, ce qui peut se formuler de la manière suivante :

$$[\text{Math. 1}] \qquad S = \text{sign}(DT2)_{SK2}$$

Les deuxièmes données DT2 utilisées par le terminal C2 pour générer la première signature S comprennent dans cet exemple :

- la clé publique PK2 du terminal C2 (qui est complémentaire à la clé privée SK2),
- une clé publique PK1a,
- un montant noté MT1a du crédit CR1 que le terminal C2 s'apprête à verser lors de la transaction courante TR1 ;
- un compteur de génération GEN1a, et
- un identifiant de transaction nonce2 qui est attribué par le terminal C2 à la transaction courante TR1.

On suppose dans cet exemple que le terminal C2 est le terminal légitime censé coopérer avec le terminal C1 lors de la transaction courante TR1 pour verser un crédit CR1 au terminal C1 puisque c'est bien le terminal C2 qui a reçu en B2 les données DT1. Aussi, la clé publique PK1a utilisée par le terminal C2 dans les deuxièmes données DT2 est identique à la clé publique PK1 reçue en B2 dans les premières données DT1. De même, le montant MT1a utilisé par le terminal C2 dans les deuxièmes données DT2 est identique au montant MT1 reçue en B2 dans les premières données DT1. De la même manière, le compteur de génération GEN1a utilisé par le terminal C2 dans les deuxièmes données DT2 est identique au compteur de génération GEN1 reçu en B2 dans les premières données DT1. Ces paramètres PK1a, MT1a et GEN1a utilisés par le terminal C2 en tant que données DT2 seront toutefois vérifiés ultérieurement par le terminal C1 pour s'assurer que la transaction TR1 en cours est valide.

A noter par ailleurs que l'identifiant de transaction nonce2 utilisé par le terminal C2 peut être un quelconque identifiant ou un compteur. Selon un exemple particulier, pour chaque nouvelle transaction au cours de laquelle le terminal C2 agit en tant que débiteur (payeur), le terminal C2 incrémente la valeur de l'identifiant de transaction nonce2 de sorte que cet identifiant présente une valeur différente pour chaque transaction.

En variante, l'identifiant de transaction nonce2 n'est pas attribué par le terminal C2 mais défini par un utilisateur, ou encore déterminé par une entité externe (par exemple le système en ligne NT1) et fourni au préalable au terminal C2 pour traiter la transaction courante TR1.

Au cours d'une étape B6 de génération, le terminal C2 calcule ensuite une deuxième signature, dite « super signature », à partir des deuxièmes données DT2 et de la première signature S. Plus précisément, dans cet exemple le terminal C2 génère (B6) la deuxième signature SS à partir des deuxièmes données DT2 et de la signature S, en utilisant la clé privée de groupe SK dont dispose le terminal C2. Autrement dit, le terminal C2 signe les deuxièmes données DT2 associées à la signature S au moyen de la clé privée de groupe SK de sorte à produire la deuxième signature SS, ce qui peut se formuler de la manière suivante :

$$[\text{Math. 2}] \qquad SS = \text{sign}(DT2, S)_{SK}$$

Comme cela apparaîtra par la suite, les signatures S et SS permettent au terminal C1 de vérifier par la suite que le terminal C2 avec lequel il coopère lors de la transaction courante TR1 est bien légitime, rendant ainsi le traitement des transactions encore plus sécurisé. A noter toutefois que d'autres modes de réalisation sont possibles sans l'usage de ces signatures S et SS, comme cela apparaît notamment en référence aux **figures 5-6.**

Comme représenté en **figure 7,** le terminal C2 réalise par ailleurs deux étapes B8 et B10 de mise à jour. Plus particulièrement, au cours de l'étape B8 de mise à jour, le terminal C2 met à jour le compteur de transaction nonce2 stocké dans cet exemple dans sa mémoire MR2. Comme déjà indiqué, l'identifiant de transaction nonce2 a été préalablement attribué (ou défini) par le terminal C2 pour identifier la transaction courante TR1. Cet identifiant nonce2 peut en particulier être un compteur représentatif d'un nombre courant de transactions réalisés par le terminal C2. Lors de la mise à jour B8, le terminal C2 peut par exemple incrémenter ou décrémenter la valeur courante du compteur nonce2. On suppose par exemple ici que le terminal C2 incrémente de 1 la valeur du compteur nonce2 en B18. D'autres mécanismes de mise à jour (décrémentation, etc.) sont toutefois possibles.

De plus, au cours de la mise à jour B10, le terminal C2 met à jour le solde de compte ACN2 associé au compte U2 du terminal C2 de sorte à soustraire au solde de compte ACN2 le montant MT1a de la transaction courante TR1. Autrement dit, le solde de compte ACN2 est débité du montant MT1a qui est censé être égal au montant MT1 demandé par le terminal C1. En variante, cette étape B10 de mise à jour est réalisée ultérieurement, par exemple une fois que le terminal C1 informe le terminal C2 que le versement du crédit CR1 a été accepté.

A noter également que l'ordre dans lequel les étapes B4 à B10 sont réalisées peut être adapté selon le cas.

Au cours d'une étape B12 d'envoi (**figure 7**), le terminal C2 envoie des troisièmes données DT3 au terminal C1 pour procéder au versement, depuis le compte U2 du terminal C2 vers le compte U1 du terminal C1, du crédit CR1 correspondant au montant MT1a. Ces troisièmes données DT3 comprennent les deuxièmes données DT2 utilisées en B4 et B6 pour calculer les signatures S et SS, ainsi que les signatures S et SS.

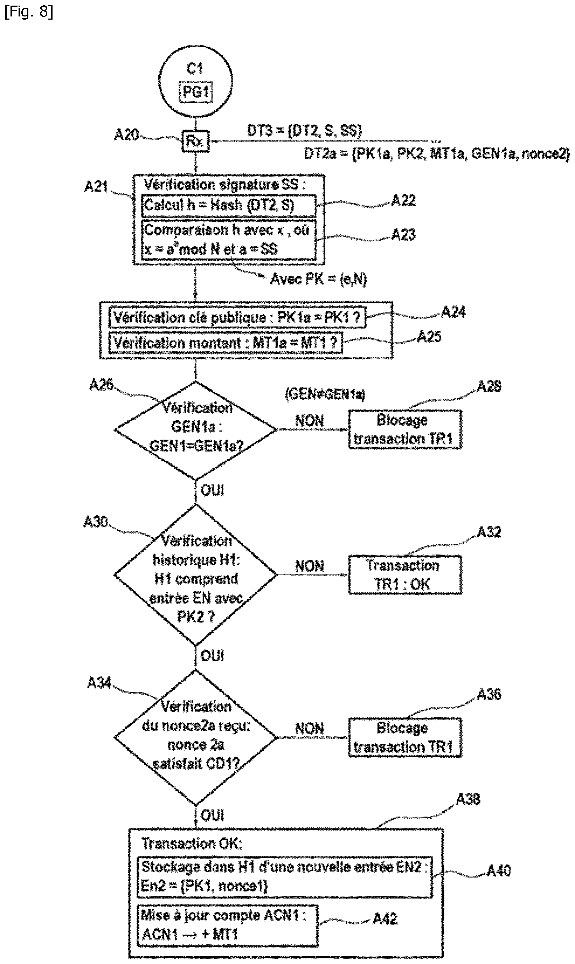

Comme représenté en **figure 8,** le terminal C1 reçoit en A20 les données DT3 en provenance du terminal C2.

Au cours d'une étape A21 de vérification, le terminal C1 vérifie la super signature SS reçues dans les données DT3 à partir de la première signature S et des données DT2 présentes également dans les données DT3 et à partir de la clé publique de groupe PK dont dispose le terminal C1 dans sa zone mémoire Z2. Comme déjà indiqué, la clé publique de groupe PK est associée à un groupe dont les premier et deuxième terminaux C1, C2 font partie.

Dans cet exemple particulier, pour vérifier (A21) la validité de la super signature SS, le terminal C1 réalise des étapes A22 et A23 (**figure 8**). Plus précisément, le terminal C2 exécute (A22) une fonction de hachage (notée « Hash ») à partir des données DT2 et de la première signature S, de sorte à obtenir une empreinte numérique h (appelée communément le « hash »). Autrement dit :

$$[Math. 3] \quad h = Hash\,(DT2, S)$$

La technique de hachage étant bien connue de l'homme du métier, elle ne sera pas décrite en détail dans ce document.

Le terminal C2 compare (A23) ensuite l'empreinte numérique h avec un paramètre x qui est tel que :

$$x = SS^e \bmod N$$

où SS est la super signature, les paramètres e et N sont définis par la clé publique de groupe PK, et mod correspond à la fonction « modulo ». L'exposant e dans l'expression cidessus est appelé l'exposant publique. N correspond au module RSA (tel qu'utilisé dans une signature cryptographique RSA ou dans un cryptosystème RSA). A cet effet, on peut par exemple utiliser PKCS#1 qui est un standard pour le cryptosystème RSA.

Le terminal C2 détecte en A23 que la super signature SS est valide si l'empreinte numérique h est égale au paramètre x calculé à partir de la super signature SS et de la clé publique de groupe SK. Si la super signature SS n'est pas valide, le terminal C2 bloque (ou rejette) la transaction TR1 et le procédé prend fin.

Ainsi, la transaction courante TR1 n'est acceptée par le terminal C1 que si le résultat de la vérification A21 de la super signature SS est positif. L'usage de la signature S et de la super signature SS permet de renforcer encore davantage la sécurité des transactions dans la mesure où cela permet de garantir l'authenticité du terminal C2 avec lequel coopère le terminal C1 lors de la transaction courante. Le terminal C1 peut ainsi faire confiance au comportement du terminal C2, et s'assurer que le terminal C2 n'est pas susceptible de lui envoyer une transaction comportant des deuxième données DT2 valides (par exemple une nouvelle valeur du premier identifiant de transaction nonce2 et/ou une nouvelle valeur du compteur de génération GEN1a) pour lui verser le montant d'un crédit déjà dépensé par ledit terminal C2. (c'est-à-dire dans cet exemple, depuis le compte utilisateur U2).

Selon d'autres exemples, la génération de signature SS et sa vérification sont selon l'algorithme ECDSA ou RSA PKCS#1 V1.5 ou V2.1. (cela est également valable pour la signature S).

Si la super signature SS est jugée valide en A21, le terminal C1 réalise des étapes A24 et A25 de vérification (**figure 8**).

Au cours de l'étape A24 de vérification, le terminal C1 vérifie que la clé publique PK1a reçues en A20 dans les données DT3 coïncide avec (est identique à) la clé publique PK1 du terminal T1 stockée dans la zone mémoire Z2 (et donc coïncide avec la clé publique PK1 fournie en A2 au terminal C2 dans cet exemple).

Au cours de l'étape A25 de vérification, le terminal C1 vérifie que le montant MT1a du crédit CR tel qu'indiqué par le terminal C2 dans les données DT3 reçues en A20 coïncide avec le (est identique au) montant MT1 spécifié dans les données DT1 transmises en A2 par le terminal C1 au terminal C2. Selon une variante, le terminal C1 vérifie en A25 que le montant MT1a est supérieur au montant MT1 (par exemple dans un cas il y a des frais appliqués lors de la transaction TR1).

A noter que l'ordre dans lequel sont réalisées les vérifications A21, A24 et A25 peut être adapté selon le cas. De manière générale, la transaction courante TR1 n'est acceptée par le terminal C1 que si le résultat de ces vérifications est positif.

En particulier, le terminal C1 n'accepte la transaction courante TR1 seulement si : la clé publique PK1a coïncide avec la clé publique PK1 et les montants MT1a et MT1 coïncident (ou, dans la variante précitée, que si le montant MT1a est supérieur au montant MT1).

A noter que des modes de réalisation sont également possibles sans réaliser au moins l'un quelconque (voire aucune des deux) parmi les étapes A24 et A25. Dans ce cas, il n'est pas nécessaire que le terminal C2 fournisse la clé publique PK1a et/ou le montant MT1a dans les données DT2 envoyées en B12. Bien que cela soit possible, il n'est alors pas non plus nécessaire que le terminal C1 envoie dans les données DT1 en A2 sa clé publique PK1 et/ou le montant MT1.

Sur détection que les étapes de vérification A21, A24 et A25 sont passées avec succès (résultats positifs), le terminal C1 réalise les étapes A26-A42 (**figure 8**) comme déjà décrit précédemment en référence aux **figures 5-6.**

Dans cet exemple particulier, on suppose que le terminal C1 détecte en A26 que la valeur initiale Val1 du compteur de génération GEN1 stocké dans la zone mémoire Z2 d'une part, et la valeur du compteur de génération GEN1a reçu dans les données DT3 d'autre part, sont identiques.

On suppose que le terminal C1 détecte ensuite en A30 la présence dans l'historique H1 de l'entrée EN1 associée à la clé publique PK2 du terminal C2 et à l'identifiant de transaction nonce1. Comme déjà indiqué, cet identifiant préenregistré nonce1 peut identifier la plus récente transaction (autre que la transaction courante TR1) au cours de laquelle un crédit CR a été reçu par le terminal C1 en provenance du terminal C2. On considère dans cet exemple que les identifiants nonce1 et nonce2 sont des compteurs de transaction. De même que pour le compteur de transaction nonce2, le compteur préenregistré nonce1 a par exemple été reçu par le terminal C1 depuis le terminal C2 au cours de la dernière (la plus récente) transaction pour transférer un crédit CR depuis le terminal C2 vers le terminal C1. Comme déjà indiqué, le recours à ces identifiants de transaction permet d'empêcher les double-paiements depuis le terminal C2 vers le terminal C1 avec des mêmes crédits CR.

Le terminal C1 détecte par exemple en A34 que la condition prédéterminée CD1 est remplie si les compteurs de transaction nonce1 et nonce2 sont différents. En variante, le terminal C1 détecte en A34 que la condition prédéterminée CD1 est remplie si les compteurs de transaction nonce1 et nonce2 sont tels que nonce2 > nonce1, dans un cas particulier où le terminal C2 incrémente son identifiant nonce pour identifier chaque nouvelle transaction pour verser un crédit CR.

On suppose à présent que le terminal C1 détecte en A34 (**figure 8**) que l'identifiant de transaction nonce2 satisfait la condition prédéterminé CD1, ce qui signifie que la transaction courante TR1 est unique et qu'il n'y a donc pas de risque de double-paiement. Le terminal C1 accepte donc la transaction courante et procède à l'étape A38 comme précédemment décrit. Le terminal C1 peut dans cet exemple utiliser en confiance l'identifiant de transaction nonce2 fourni par le terminal C2 en A20 dans la mesure où l'authenticité du terminal C2 a été vérifiée au préalable à l'aide des signatures S et SS.

Le terminal C1 réalise donc le stockage A40 d'une nouvelle entrée EN2 et la mise à jour A42 du solde de compte ACN1, comme déjà décrit précédemment en référence aux **figures 5-6.** A noter qu'au cours de l'étape A40 de stockage, le terminal C1 enregistre dans l'historique H1 une nouvelle entrée EN2 associée à la clé publique PK2 du deuxième terminal C2 et à l'identifiant de transaction nonce2 reçu en A20 depuis le terminal C2. Cet identifiant de transaction nonce2 pourra ainsi être utilisé par le terminal C1 lors d'une prochaine transaction au cours de laquelle le terminal C2 tente à nouveau de réaliser un versement de crédit au terminal C1. En particulier, le terminal C1 pourra prendre en compte ce nonce2 au cours d'une nouvelle occurrence de l'étape A34 pour déterminer si un nouveau nonce (noté nonce3) reçu satisfait la condition d'unicité CD1 (comme déjà décrit en référence à l'étape A34, **figures 5** et **8**).

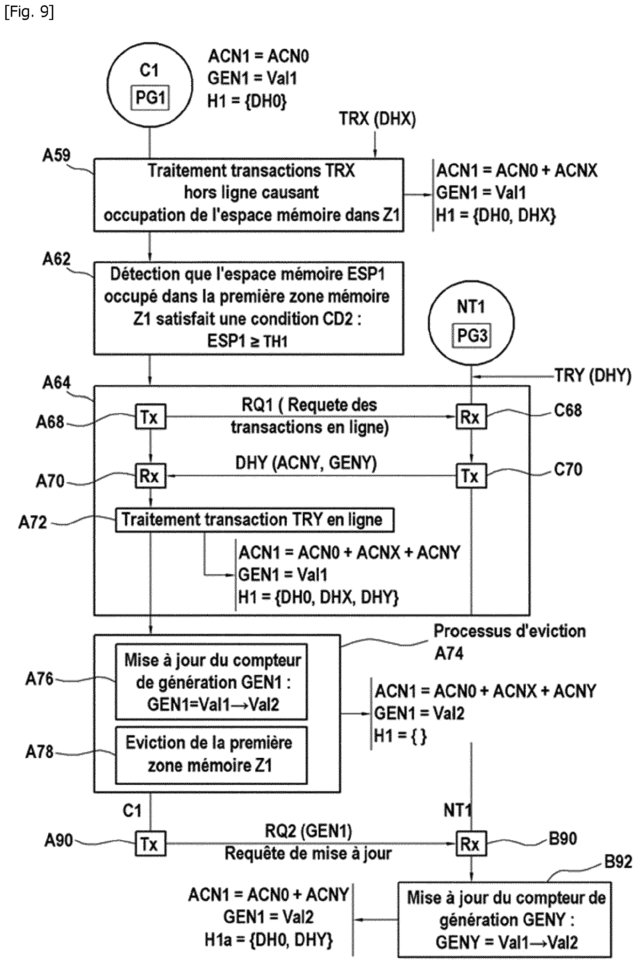

Par ailleurs, la **figure 9** représente un exemple d'implémentation de l'étape A60 de gestion représenté en **figure 6**. Comme déjà décrit, cette étape A60 vise à gérer l'espace mémoire de la première zone mémoire Z1, cette étape comprenant une étape A62 de détection et un processus d'éviction A74. Cette étape de gestion A60 peut être déclenchée à divers moment, en réponse à un évènement déclencheur détecté en A62.

Plus précisément, on suppose que le terminal C1 se trouve dans un état initial selon lequel :

- le solde de compte ACN1 stocké dans la zone mémoire Z2 est égal au montant ACN0 d'au moins une transaction passée au cours de laquelle le terminal C1 a reçu un crédit CR d'un dispositif débiteur (ACN1 = ACN0 où ACN0 est le montant de la ou les transactions passées) ;
- le compteur de génération GEN1 stocké dans la zone mémoire Z2 est fixé à une valeur initiale Val1 (GEN1 = Val1) ;
- l'historique H1 stocké dans la zone mémoire Z1 comprend des données d'historique DH0 représentatives de la ou des transactions passées.

Avant l'étape A62 de détection, on suppose que le terminal C1 traite (A59, **figure 9**) une ou des transactions TRX hors ligne avec au moins un terminal externe quelconque (par exemple avec le terminal C2). A chaque fois qu'une transaction TRX hors ligne est acceptée (A38, **figures 5** et **8**), le terminal C1 met à jour son historique H1 dans la zone mémoire Z1 et son solde de compte ACN1 dans la zone mémoire Z2. Une fois la ou les transactions TRX hors ligne acceptées, l'historique H1 comprend donc les données d'historique DH0 ainsi que des données d'historique DH1 représentatives des transactions TRX. Le solde de compte ACN1 est également incrémenté du montant ACNX des transactions TRX hors ligne effectuées (ACN1 = ACN0 + ACNX). On suppose dans cet exemple qu'aucun processus d'éviction A74 (**figures 6**) n'a été réalisé à ce stade depuis l'étape A59 de traitement, de sorte que le compteur de génération GEN1 stocké dans la zone mémoire Z2 reste inchangé à la valeur initiale Val1.

On suppose à présent que le terminal C1 vérifie si la condition prédéterminée CD2 est remplie et détecte en A62 que l'espace mémoire ESP1 occupé dans la première zone mémoire Z1 satisfait cette condition CD2, ce qui signifie qu'il y a un risque de saturation de la zone mémoire Z1. Cette vérification est par exemple réalisée au cours d'une transaction (à la fin de la transaction par exemple). Le terminal C1 détecte par exemple que l'espace mémoire occupé ESP1 atteint au moins une valeur seuil TH1 qui peut correspondre, par exemple, à 75% ou 80% de l'espace totale de la zone mémoire Z1.

Comme représenté en **figure 9,** sur détection que la condition prédéterminée CD2 est satisfaite (A62), le terminal C1 interroge le système en ligne NT1 afin de récupérer d'éventuelles données représentatives de transactions TRY en ligne susceptibles d'avoir été récemment reçues pour verser des crédits CR au compte U1 associé au terminal C1. Pour ce faire, le terminal C1 envoie (A68) une requête RQ1 de transactions en ligne au système en ligne NT1 qui reçoit cette requête en C68 (**figure 1**). En réponse, le système en ligne NT1 envoie (C70) au terminal C1 des données de transaction DHY - dites données de transaction en ligne - représentatives d'au moins une transaction TRY en ligne réalisée par le système en ligne NT1 en coopération avec au moins un dispositif externe (autre que C1) pour verser un crédit CR au compte U1 associé au terminal C1.

Les données de transaction en ligne DHY spécifient en particulier un solde ACNY de crédit CR à verser au compte U1 associé au terminal C1. Ces données de transaction en ligne DHY peuvent également comprendre un compteur de génération GENY associé à chaque transaction TRY hors ligne.

Le terminal C1 reçoit les données de transaction en ligne DHY en A70 puis traite (A72) ces données DHY pour mettre à jour son solde de compte ACN1 et son historique H1 en conséquence. On suppose donc ici que le terminal C1 crédite le solde de compte ACN1 du montant ACNY correspondant aux montants cumulés des transactions TRY en ligne traitées par le système en ligne NT1 (ainsi ANC1 = ACN0 + ACNX + ACNY). De même, le terminal C1 peut mettre à jour l'historique H1 pour y inclure les données de transaction en ligne DHY des transactions TRY en ligne. On suppose dans cet exemple qu'aucun processus d'éviction A74 (**figures 6**) n'a été réalisé à ce stade depuis l'étape A60 de traitement, de sorte que le compteur de génération GEN1 stocké dans la zone mémoire Z2 reste inchangé à la valeur initiale Val1.

A noter que si un compteur de génération GENY est fourni par le système en ligne NT1 dans les données de transaction en ligne DHY pour chaque transaction TRY en ligne traitée, alors le terminal C1 peut traiter en A72 ces compteurs pour vérifier s'ils sont valides. Pour ce faire, le terminal C1 vérifie (A72) que chaque compteur de génération GENY reçu coïncide avec le compteur de génération GEN1 courant stocké dans la zone mémoire Z2, de la même manière que lors de l'étape A26 de vérification précédemment décrite (**figures 5** et **8**). Le terminal C1 n'accepte alors que chaque transaction pour laquelle le compteur de génération GENY fourni par le système en ligne NT1 est valide (c.-à-d. synchrone avec le compteur de génération GEN1 courant). Autrement dit, le terminal C1 met alors à jour le solde de compte ACN1 stocké dans la deuxième zone mémoire Z2 à partir des données de transaction en ligne en ligne DHY correspondant à chaque transaction en ligne TRY dont le compteur de génération GENY fourni en A70 coïncide avec le compteur de génération GEN1. Le terminal C1 peut également mettre à jour l'historique H1 pour n'inclure que les données de transaction en ligne DHY correspondant à chaque transaction en ligne TRY dont le compteur de génération GENY associé est valide.

Selon un exemple particulier, lors du traitement A72, le terminal C1 vérifie également si les données de transaction en ligne DHY reçues en A70 correspondent à des données de transaction DH qui sont déjà stockées dans l'historique H1. Autrement dit, le terminal C1 vérifie que les transactions en ligne TRY spécifiées par les données DHY ne sont pas déjà présentes dans l'historique H1. Le terminal C1 ne prend alors en compte que les transactions en ligne TRY qui ne sont pas déjà stockées dans l'historique H1 pour mettre à jour le solde de compte ACN1 et l'historique H1 en A72.

Une fois les transactions TRY en ligne traitée, le terminal C1 réalise le processus d'éviction A74 de la même manière que décrit précédemment en référence aux **figures 5-6.** Dans cet exemple, le terminal C1 met ainsi à jour (A76) le compteur de génération GEN1 stocké dans sa zone mémoire Z2, de sorte à assigner à ce compteur GEN1 une nouvelle valeur Val2, différent de la valeur initiale Val1. Pour ce faire, le terminal C1 incrémente par exemple de 1 le compteur de génération GEN1. Le terminal C1 réalise également une éviction (ou purge) A78 comme déjà décrit de sorte à supprimer tout ou partie de l'historique H1. On suppose ici que tout l'historique H1 est supprimé de sorte à libérer un maximum d'espace mémoire.

Selon un exemple particulier, une fois le processus d'éviction A74 réalisé, le terminal C1 envoie (A90, **figure 9**) au système en ligne NT1 une requête de mise à jour RQ2 comprenant le compteur de génération GEN1 courant, c'est-à-dire qui a la nouvelle valeur Val2 assignée lors de la mise à jour A76, de sorte à ce que le serveur en ligne NT1 puisse associer la clé publique PK1 du premier terminal C1 avec le compteur de génération GEN1 fixé à la nouvelle valeur Val2 pour en permettre l'accès à au moins un dispositif externe (ou à des dispositifs externes) dont, par exemple, le terminal C2.

Ainsi, en réponse à la requête RQ2 reçue en B90, le système en ligne NT1 met à jour (B92) une valeur courante du compteur de génération GENY stocké en association à la clé publique PK1 du terminal C1. Cette valeur peut être stockée et mise à jour dans une mémoire dudit système NT1, par exemple dans la mémoire d'un ou plusieurs serveurs SV **(figure 1),** de sorte que le compteur GENY soit égal au compteur GEN1 à jour.

Le compteur de génération GENY associé à la clé publique PK1 est en outre accessible par au moins un dispositif externe, tel que par exemple le terminal C2 dans ce cas particulier. Ainsi, le terminal C2 (et éventuellement aussi d'autres dispositifs externes) sont capables de traiter des transactions ultérieures en utilisant le compteur de génération GENY avec la valeur à jour, afin de verser un crédit CR au terminal C1. En particulier, le terminal C2 peut ainsi inclure dans ses données de transaction DT3 le compteur de génération GENY à jour (en tant que compteur GEN1a) de la même façon que décrit ci-avant en référence à l'étape A20 d'envoi **(figures 5** et **8**).

A noter que des variantes sont possibles dans lesquelles l'étape A64 de récupération des données de transactions en ligne DHY, et éventuellement aussi les étapes A90 et B90-B92, ne sont pas réalisées.

Comme indiqué ci-avant, le processus d'éviction A74 décrit ci-avant en référence aux **figures 6** et **9** peut intervenir à divers moments, selon la configuration du terminal C1 et l'état d'occupation de la zone mémoire Z1. Selon un exemple particulier, la mise à jour A76 du compteur de génération GEN1 est réalisée après l'envoi A2 des données DT1 mais avant la réception A20 des données DT1 **(figure 7),** causant la détection d'une non concordance (désynchronisation) des compteurs de génération GEN1 et GEN1a lors de la vérification A26.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant, conformément aux revendications qui suivent, afin de répondre à un besoin bien particulier.

## Revendications

**1.** Procédé de contrôle mis en oeuvre par un premier dispositif (C1) apte à traiter des transactions en coopération avec un deuxième dispositif (C2), le premier dispositif comprenant :

    - une première zone mémoire (Z1) dans laquelle est stocké un historique (H1) comprenant une ou des entrées représentatives d'une transaction, et
    - une deuxième zone mémoire (Z2) dans laquelle est stocké un premier compteur de génération (GEN1) fixé à une valeur initiale (Val1),

le procédé comprenant, au cours d'un traitement d'une transaction courante (TR1) :

    a) consultation de la deuxième zone mémoire (Z2) pour déterminer le premier compteur de génération (GEN1) à un instant courant au cours duquel est traitée la transaction courante.
    b) réception (A20), en provenance du deuxième dispositif, de premières données (DT3) comprenant des deuxièmes données (DT2), lesdites deuxièmes données comprenant :

        - une clé publique (PK2) du deuxième dispositif,
        - un montant (MT1a) d'un crédit à verser lors la transaction courante,
        - un deuxième compteur de génération (GEN1a), et
        - un premier identifiant de transaction (nonce2) attribué par le deuxième dispositif à la transaction courante ;

    c) vérification (A26) que les premier et deuxième compteurs de génération (GEN1, GEN1a) ont des valeurs qui sont égales ;
    d) si le résultat de la vérification c) est négatif, refus de la transaction courante par ledit premier dispositif (C1) ;
    e) si le résultat de la vérification c) est positif, vérification (A30) dans la première zone mémoire (Z1) que l'historique (H1) comprend une entrée (EN) associée à la clé publique (PK2) du deuxième dispositif ;
    f) si le résultat de la vérification e) est négatif, la transaction courante est (A32) acceptée ;
    g) si le résultat de la vérification e) est positif, vérification (A34) que le premier identifiant de transaction (nonce2) satisfait une première condition prédéterminée (CD1) indiquant l'unicité de la transaction courante ;
    h) si le résultat de la vérification g) est positif, la transaction courante est acceptée (A38) ;

dans lequel, si la transaction courante est acceptée, le traitement de la transaction courante comprend en outre :

    i) stockage (A40) dans l'historique (H1) d'une nouvelle entrée (EN2) associée à la clé publique (PK2) du deuxième dispositif ; et
    j) mise à jour (A42) d'un solde de compte (ACN1) stocké dans la deuxième zone mémoire (Z2), de sorte à verser le montant dudit crédit au compte associé au premier dispositif ;

le procédé comprenant en outre une étape de gestion de la première zone mémoire (Z1), ladite étape de gestion étant mise en oeuvre avant, après ou pendant une transaction courante et, comprenant :

k) détection que l'espace occupé (ESP1) dans la première zone mémoire satisfait une deuxième condition prédéterminée (CD2) indiquant un risque de saturation de ladite première zone mémoire ; et
l) en réponse à la détection k), réalisation d'un processus d'éviction comprenant :

l1) mise à jour du premier compteur de génération (GEN1) dans la deuxième zone mémoire (Z2) de sorte à assigner audit premier compteur de génération une nouvelle valeur (Val2) différente de la valeur initiale; et
l2) éviction d'au moins une partie de la première zone mémoire (Z1) afin de libérer de l'espace mémoire,

Lorsque ladite étape de gestion est mise en oeuvre pendant la transaction courante, elle est mise en oeuvre à l'exception des instants suivants :

- Entre, et pendant, l'étape de consultation de la deuxième zone mémoire (Z2) pour déterminer le premier compteur de génération (GEN1) à un instant courant au cours duquel est traitée la transaction courante et l'étape A30, si le test de l'étape A26 est positif.
- Entre, et pendant, l'étape de consultation de la deuxième zone mémoire (Z2) pour déterminer le premier compteur de génération (GEN1) à un instant courant au cours duquel est traitée la transaction courante et l'étape A26, si le test de l'étape A26 est négatif.
- Entre, et pendant, l'étape de consultation de la deuxième zone mémoire (Z2) pour déterminer le premier compteur de génération (GEN1) à un instant courant au cours duquel est traitée la transaction courante et l'étape A40.

2. Procédé selon la revendication 1, dans lequel le traitement de la transaction courante (TR1) comprend, avant l'étape b) :
m) envoi au deuxième dispositif de troisièmes données (DT1) pour demander le versement par le deuxième dispositif du montant dudit crédit au compte associé au premier dispositif, lesdites troisièmes données comprenant le premier compteur de génération (GEN1) fixé à la valeur initiale.

3. Procédé selon l'une quelconque des revendications 1 à 2, dans lequel les premières données (DT3) reçues en b) comprennent :

- une première signature (S) calculée à partir des deuxièmes données (DT2), et
- une deuxième signature (SS) calculée à partir des deuxièmes données et de la première signature ;

le procédé comprenant, après la réception b) :

n) vérification de la deuxième signature (SS) à partir de la première signature (S) et des deuxièmes données (DT2) reçues dans les premières données (DT3) et à partir d'une clé publique de groupe (PK) associée à un groupe dont les premier et deuxième dispositifs font partie ;
la transaction courante n'étant acceptée que si le résultat de la vérification n) est positif.

4. Procédé selon l'une quelconque des revendications 1 à 3, dans lequel s'il est déterminé lors de la vérification c) que les premier et deuxième compteurs de génération (GEN1, GEN1a) ont des valeurs qui ne sont pas égales, la transaction courante est bloquée.

5. Procédé selon l'une quelconque des revendications 1 à 4, dans lequel le premier identifiant de transaction (nonce2) attribué par le deuxième dispositif est un compteur représentatif d'un nombre courant de transactions réalisés par le deuxième dispositif.

6. Procédé selon l'une quelconque des revendications 1 à 5, dans lequel lors du stockage i) la nouvelle entrée est associée à la clé publique (PK2) du deuxième dispositif et au premier identifiant de transaction (nonce2) ;

dans lequel la vérification g) comprend :

- détermination d'un deuxième identifiant de transaction (nonce1) stocké, en association avec la clé publique du deuxième dispositif, dans une entrée (EN1) détectée dans l'historique (H1) au cours de la vérification e) ; et
- comparaison du premier identifiant de transaction (nonce2) avec le deuxième identifiant de transaction (nonce1),

dans lequel la première condition prédéterminée (CD1) est détectée comme étant satisfaite si les premier et deuxième identifiants de transaction sont différents ou si les premier et deuxième identifiants de transaction sont des compteurs tels que le premier identifiant de transaction est supérieur au deuxième identifiant de transaction.

7. Procédé selon l'une quelconque des revendications 1 à 6, mis en oeuvre par un premier porte-monnaie virtuel implémenté par le premier dispositif, en coopération avec un deuxième porte-monnaie virtuel implémenté dans le deuxième dispositif, la transaction courante étant une transaction de paiement dudit crédit dans une monnaie cryptographique.

8. Procédé selon l'une quelconque des revendications 1 à 6, dans lequel la transaction courante est une transaction de réputation et le crédit versé lors de ladite transaction de réputation est un crédit de réputation.

9. Procédé selon l'une quelconque des revendications 1 à 8, dans lequel lors de la détection k), la deuxième condition prédéterminée (CD2) est satisfaite si l'espace occupé dans la zone mémoire atteint une portion prédéterminée de l'espace totale de la première zone mémoire.

10. Procédé selon l'une quelconque des revendications 1 à 9, dans lequel au cours de l'éviction l2), toute la première zone mémoire (Z1) est vidée afin de libérer de l'espace mémoire.

11. Procédé selon l'une quelconque des revendications 1 à 10, dans lequel lors du processus d'éviction l) :

    - la mise à jour l1) et l'éviction l2) sont réalisées en concomitance, ou
    - l'éviction l2) est réalisée après la mise à jour l1).

12. Procédé selon l'une quelconque des revendications 1 à 11, dans lequel la mise à jour l1) du premier compteur de génération cause un blocage de toutes transactions, traitées par le premier dispositif, pour lesquelles le deuxième compteur de génération (GEN1a) reçu en b) a une valeur qui diffère de la nouvelle valeur.

13. Procédé selon l'une quelconque des revendications 1 à 12, dans lequel l'étape de gestion de la première zone mémoire (Z1) comprend, en réponse à la détection k) et avant le processus d'éviction l) :

    o) envoi d'une requête de transactions en ligne à un système en ligne comprenant au moins un serveur ;
    p) réception, en réponse à ladite requête de transactions en ligne, de données de transaction en ligne représentatives d'au moins une transaction en ligne réalisée par ledit système en ligne en coopération avec au moins un dispositif externe pour verser un crédit au compte associé au premier dispositif, lesdites données de transaction en ligne comprenant un troisième compteur de génération en association avec chaque transaction en ligne ; et
    q) vérification pour chaque transaction en ligne que les premier et troisième compteurs de génération (GEN1, GEN3) ont des valeurs qui sont égales ; et
    r) mise à jour, à partir des données de transaction en ligne correspondant à chaque transaction en ligne dont le troisième compteur de génération coïncide avec le premier compteur de génération, du solde de compte (ACN1) stocké dans la deuxième zone mémoire (Z2).

14. Procédé selon la revendication 13, dans lequel le processus d'éviction l) comprend, après la mise à jour l1) :
    s) envoi au système en ligne du premier compteur de génération ayant la nouvelle valeur assignée en l1), de sorte que le serveur en ligne puisse associer la clé publique (PK1) du premier dispositif avec le premier compteur de génération fixé à la nouvelle valeur pour en permettre l'accès à au moins un dispositif externe pour traiter des transactions ultérieures.

15. Procédé de contrôle mis en oeuvre par un système comprenant un premier dispositif mettant en oeuvre un procédé selon l'une quelconque des revendications 1 à 14 et un deuxième dispositif coopérant avec le premier dispositif, le procédé comprenant :

    t) acquisition, par le deuxième dispositif, de la clé publique (PK2) du deuxième dispositif, du montant (MT1a) du crédit à verser lors la transaction courante, du deuxième compteur de génération (GEN1a), et du premier identifiant de transaction (nonce2) attribué par le deuxième dispositif à la transaction courante ; et
    u) envoi, par le deuxième dispositif, au premier dispositif des premières données (DT3) comprenant les deuxièmes données (DT2), pour causer le versement du montant du crédit au compte associé au premier dispositif.

16. Programme d'ordinateur (PG1 ; PG2) comportant des instructions pour l'exécution des étapes d'un procédé de contrôle selon l'une quelconque des revendications 1 à 15 lorsque ledit programme est exécuté par un ordinateur.

**Patentansprüche**

1. Kontrollverfahren, das von einer ersten Vorrichtung (C1) durchgeführt wird, die fähig ist, Transaktionen in Zusammenwirkung mit einer zweiten Vorrichtung (C2) zu verarbeiten, wobei die erste Vorrichtung enthält:

    - eine erste Speicherzone (Z1), in der eine Historie (H1) gespeichert ist, die eine oder mehrere für eine Transaktion repräsentative Einträge enthält, und

- eine zweite Speicherzone (Z2), in der ein erster Generierungszähler (GEN1) gespeichert ist, der auf einen Anfangswert (Val1) festgelegt ist,

wobei das Verfahren während einer Verarbeitung einer aktuellen Transaktion (TR1) enthält:

a) Abfrage der zweiten Speicherzone (Z2), um den ersten Generierungszähler (GEN1) zu einem aktuellen Zeitpunkt zu bestimmen, während dessen die aktuelle Transaktion verarbeitet wird,

b) Empfang (A20) zweite Daten (DT2) enthaltender erster Daten (DT3) von der zweiten Vorrichtung, wobei die zweiten Daten enthalten:

- einen öffentlichen Schlüssel (PK2) der zweiten Vorrichtung,
- einen Betrag (MT1a) eines bei der aktuellen Transaktion zu zahlenden Kredits,
- einen zweiten Generierungszähler (GEN1a), und
- eine erste Transaktionskennung (nonce2), die der aktuellen Transaktion von der zweiten Vorrichtung zugeteilt wird;

c) Überprüfung (A26), dass die ersten und zweiten Generierungszähler (GEN1, GEN1a) Werte haben, die gleich sind;

d) wenn das Ergebnis der Überprüfung c) negativ ist, Verweigerung der aktuellen Transaktion durch die erste Vorrichtung (C1);

e) wenn das Ergebnis der Überprüfung c) positiv ist, Überprüfung (A30) in der ersten Speicherzone (Z1), dass die Historie (H1) einen dem öffentlichen Schlüssel (PK2) der zweiten Vorrichtung zugeordnete Eintrag (EN) enthält;

f) wenn das Ergebnis der Überprüfung e) negativ ist, wird die aktuelle Transaktion akzeptiert (A32);

g) wenn das Ergebnis der Überprüfung e) positiv ist, Überprüfung (A34), dass die erste Transaktionskennung (nonce2) eine erste vorbestimmte Bedingung (CD1) erfüllt, die die Einmaligkeit der aktuellen Transaktion anzeigt;

h) wenn das Ergebnis der Überprüfung g) positiv ist, wird die aktuelle Transaktion akzeptiert (A38);

wobei, wenn die aktuelle Transaktion akzeptiert wird, die Verarbeitung der aktuellen Transaktion außerdem enthält:

i) Speichern (A40) eines dem öffentlichen Schlüssel (PK2) der zweiten Vorrichtung zugeordneten neuen Eintrags (EN2) in der Historie (H1); und

j) Aktualisierung (A42) eines in der zweiten Speicherzone (Z2) gespeicherten Kontensaldos (ACN1), um den Betrag des Kredits an das der ersten Vorrichtung zugeordnete Konto zu zahlen;

wobei das Verfahren außerdem einen Verwaltungsschritt der ersten Speicherzone (Z1) enthält, wobei der Verwaltungsschritt vor, nach oder während einer aktuellen Transaktion durchgeführt wird und enthält:

k) Erkennung, dass der in der ersten Speicherzone belegte Raum (ESP1) eine zweite vorbestimmte Bedingung (CD2) erfüllt, die eine Gefahr der Sättigung der ersten Speicherzone anzeigt; und

l) als Antwort auf die Erkennung k) Durchführung eines Verdrängungsprozesses, der enthält:

11) Aktualisierung des ersten Generierungszählers (GEN1) in der zweiten Speicherzone (Z2), um dem ersten Generierungszähler einen neuen Wert (Val2) anders als der Anfangswert zuzuweisen; und

12) Verdrängung mindestens eines Teils der ersten Speicherzone (Z1), um Speicherraum freizugeben,

wenn der Verwaltungsschritt während der aktuellen Transaktion durchgeführt wird, wird er mit Ausnahme der folgenden Zeitpunkte durchgeführt:

- zwischen dem und während des Schritts der Abfrage der zweiten Speicherzone (Z2), um den ersten Generierungszähler (GEN1) zu einem aktuellen Zeitpunkt zu bestimmen, während dessen die aktuelle Transaktion verarbeitet wird, und dem Schritt A30, wenn der Test des Schritts A26 positiv ist,

- zwischen dem und während des Schritts der Abfrage der zweiten Speicherzone (Z2), um den ersten Generierungszähler (GEN1) zu einem aktuellen Zeitpunkt zu bestimmen, während dessen die aktuelle Transaktion verarbeitet wird, und dem Schritt A26, wenn der Test des Schritts A26 negativ ist,

- zwischen dem und während des Schritts der Abfrage der zweiten Speicherzone (Z2), um den ersten Generierungszähler (GEN1) zu einem aktuellen Zeitpunkt zu bestimmen, während dessen die aktuelle Transaktion verarbeitet wird, und dem Schritt A40.

2. Verfahren nach Anspruch 1, wobei die Verarbeitung der aktuellen Transaktion (TR1) vor dem Schritt b) enthält:

m) Senden von dritten Daten (DT1) an die zweite Vorrichtung, um die Zahlung des Betrags des Kredits an das der ersten Vorrichtung zugeordnete Konto durch die zweite Vorrichtung anzufordern, wobei die dritten Daten den auf den Anfangswert festgelegten ersten Generierungszähler (GEN1) enthalten.

3. Verfahren nach einem der Ansprüche 1 bis 2, wobei die in b) empfangenen ersten Daten (DT3) enthalten:

- eine ausgehend von den zweiten Daten (DT2) berechnete erste Signatur (S), und
- eine ausgehend von den zweiten Daten und der ersten Signatur berechnete zweite Signatur (SS);

wobei das Verfahren nach dem Empfang b) enthält:

n) Überprüfung der zweiten Signatur (SS) ausgehend von der ersten Signatur (S) und den in den ersten Daten (DT3) empfangenen zweiten Daten (DT2) und ausgehend von einem öffentlichen Gruppenschlüssel (PK), der einer Gruppe zugeordnet ist, zu der die erste und die zweite Vorrichtung gehören;

wobei die aktuelle Transaktion nur akzeptiert wird, wenn das Ergebnis der Überprüfung n) positiv ist.

4. Verfahren nach einem der Ansprüche 1 bis 3, wobei, wenn bei der Überprüfung c) bestimmt wird, dass der erste und der zweite Generierungszähler (GEN1, GEN1a) Werte haben, die nicht gleich sind, die aktuelle Transaktion blockiert wird.

5. Verfahren nach einem der Ansprüche 1 bis 4, wobei die von der zweiten Vorrichtung zugeteilte erste Transaktionskennung (nonce2) ein Zähler ist, der für eine aktuelle Anzahl von Transaktionen repräsentativ ist, die von der zweiten Vorrichtung durchgeführt werden.

6. Verfahren nach einem der Ansprüche 1 bis 5, wobei beim Speichern i) der neue Eintrag dem öffentlichen Schlüssel (PK2) der zweiten Vorrichtung und der ersten Transaktionskennung (nonce2) zugeordnet wird;

wobei die Überprüfung g) enthält:

- Bestimmung einer zweiten Transaktionskennung (nonce1), die zusammen mit dem öffentlichen Schlüssel der zweiten Vorrichtung in einem Eintrag (EN1) gespeichert wird, der während der Überprüfung e) in der Historie (H1) erkannt wird; und
- Vergleich der ersten Transaktionskennung (nonce2) mit der zweiten Transaktionskennung (nonce1),

wobei die erste vorbestimmte Bedingung (CD1) als erfüllt erkannt wird, wenn die ersten und zweiten Transaktionskennungen unterschiedlich sind oder wenn die ersten und zweiten Transaktionskennungen derartige Zähler sind, dass die erste Transaktionskennung größer ist als die zweite Transaktionskennung.

7. Verfahren nach einem der Ansprüche 1 bis 6, das von einer von der ersten Vorrichtung implementierten ersten virtuellen Geldbörse in Zusammenwirkung mit einer in der zweiten Vorrichtung implementierten zweiten virtuellen Geldbörse durchgeführt wird, wobei die aktuelle Transaktion eine Zahlungstransaktion des Kredits in einer Kryptowährung ist.

8. Verfahren nach einem der Ansprüche 1 bis 6, wobei die aktuelle Transaktion eine Reputationstransaktion und der bei der Reputationstransaktion gezahlte Kredit ein Reputationskredit ist.

9. Verfahren nach einem der Ansprüche 1 bis 8, wobei bei der Erkennung k) die zweite vorbestimmte Bedingung (CD2) erfüllt ist, wenn der in der Speicherzone belegte Raum einen vorbestimmten Anteil des Gesamtraums der ersten Speicherzone erreicht.

10. Verfahren nach einem der Ansprüche 1 bis 9, wobei während der Verdrängung 12) die ganze erste Speicherzone (Z1) geleert wird, um Speicherraum freizugeben.

11. Verfahren nach einem der Ansprüche 1 bis 10, wobei beim Verdrängungsprozess l):

- die Aktualisierung 11) und die Verdrängung 12) gleichzeitig durchgeführt werden, oder
- die Verdrängung 12) nach der Aktualisierung 11) durchgeführt wird.

12. Verfahren nach einem der Ansprüche 1 bis 11, wobei die Aktualisierung 11) des ersten Generierungszählers ein Blockieren aller von der ersten Vorrichtung verarbeiteten Transaktionen verursacht, für die der in b) empfangene zweite Generierungszähler (GEN1a) einen Wert hat, der sich vom neuen Wert unterscheidet.

13. Verfahren nach einem der Ansprüche 1 bis 12, wobei der Verwaltungsschritt der ersten Speicherzone (Z1) als Antwort auf die Erkennung k) und vor dem Verdrängungsprozess l) enthält:

o) Online-Senden einer Anforderung von Transaktionen an ein Online-System, das mindestens einen Server enthält;
p) Empfang, als Antwort auf die Online-Anforderung von Transaktionen, von Online-Transaktionsdaten, die für mindestens eine Online-Transaktion repräsentativ sind, die von dem Online-System in Zusammenwirkung mit mindestens einer externen Vorrichtung durchgeführt wird, um einen Kredit an das der ersten Vorrichtung zugeordnete Konto zu zahlen, wobei die Online-Transaktionsdaten einen jeder Online-Transaktion zugeordneten dritten Generierungszähler enthalten; und

q) Überprüfung für jede Online-Transaktion, dass die ersten und dritten Generierungszähler (GEN1, GEN3) Werte haben, die gleich sind; und

r) Aktualisierung, ausgehend von den Online-Transaktionsdaten, die jeder Online-Transaktion entsprechen, deren dritter Generierungszähler mit dem ersten Generierungszähler des in der zweiten Speicherzone (Z2) gespeicherten Kontensaldos (ACN1) übereinstimmt.

14. Verfahren nach Anspruch 13, wobei der Verdrängungsprozess l) nach der Aktualisierung 11) enthält: s) Senden des ersten Generierungszählers, der den in 11) zugewiesenen neuen Wert hat, an das Online-System, so dass der Online-Server den öffentlichen Schlüssel (PK1) der ersten Vorrichtung dem auf den neuen Wert festgelegten ersten Generierungszähler zuordnen kann, um mindestens einer externen Vorrichtung den Zugriff darauf zu erlauben, um spätere Transaktionen zu verarbeiten.

15. Kontrollverfahren, das von einem System durchgeführt wird, das eine erste Vorrichtung, die ein Verfahren nach einem der Ansprüche 1 bis 14 durchführt, und eine zweite Vorrichtung enthält, die mit der ersten Vorrichtung zusammenwirkt, wobei das Verfahren enthält:

t) Erfassung, durch die zweite Vorrichtung, des öffentlichen Schlüssels (PK2) der zweiten Vorrichtung, des Betrags (MT1a) des bei der aktuellen Transaktion zu zahlenden Kredits, des zweiten Generierungszählers (GEN1a) und der ersten Transaktionskennung (nonce2), die von der zweiten Vorrichtung der aktuellen Transaktion zugeteilt wird; und

u) Senden, durch die zweite Vorrichtung an die erste Vorrichtung, von die zweiten Daten (DT2) enthaltenden ersten Daten (DT3), um die Zahlung des Betrags des Kredits an das der ersten Vorrichtung zugeordnete Konto zu veranlassen.

16. Computerprogramm (PG1; PG2), das Anweisungen für die Ausführung der Schritte eines Kontrollverfahrens nach einem der Ansprüche 1 bis 15 aufweist, wenn das Programm von einem Computer ausgeführt wird.

## Claims

1. Control method implemented by a first device (C1) able to process transactions in cooperation with a second device (C2), the first device comprising:

- a first memory area (Z1) storing a history (H1) comprising one or more entries representative of a transaction, and
- a second memory area (Z2) storing a first generation counter (GEN1) set to an initial value (Val1),

the method comprising, during processing of a current transaction (TR1):

a) consulting the second memory area (Z2) in order to determine the first generation counter (GEN1) at a current time during which the current transaction is being processed;
b) receiving (A20), from the second device, first data (DT3) comprising second data (DT2), said second data comprising:

- a public key (PK2) of the second device,
- an amount (MT1a) of a credit to be paid during the current transaction,
- a second generation counter (GEN1a), and
- a first transaction identifier (nonce2) assigned by the second device to the current transaction;

c) checking (A26) that the first and second generation counters (GEN1, GEN1a) have values that are equal;
d) if the result of the check c) is negative, said first device (C1) declining the current transaction;
e) if the result of the check c) is positive, checking (A30), in the first memory area (Z1), that the history (H1) comprises an entry (EN) associated with the public key (PK2) of the second device;
f) if the result of the check e) is negative, the current transaction is accepted (A32);
g) if the result of the check e) is positive, checking (A34) that the first transaction identifier (nonce2) satisfies a first predetermined condition (CD1) indicating the uniqueness of the current transaction;
h) if the result of the check g) is positive, the current transaction is accepted (A38);

wherein, if the current transaction is accepted, the processing of the current transaction furthermore comprises:

i) storing (A40) a new entry (EN2) associated with the public key (PK2) of the second device in the history (H1); and

j) updating (A42) an account balance (ACN1) stored in the second memory area (Z2), so as to pay the amount of said credit to the account associated with the first device;

the method furthermore comprising a step of managing the first memory area (Z1), said management step being implemented before, after or during a current transaction, and comprising:

k) detecting that the space (ESP1) taken up in the first memory area satisfies a second predetermined condition (CD2) indicating a risk of saturation of said first memory area; and

l) in response to the detection k), carrying out an eviction process comprising:

11) updating the first generation counter (GEN1) in the second memory area (Z2) so as to assign a new value (Val2) different from the initial value to said first generation counter; and

12) evicting at least part of the first memory area (Z1) in order to free up memory space,

when said management step is implemented during the current transaction, it is implemented except for at the following times:

- Between, and during, the step of consulting the second memory area (Z2) in order to determine the first generation counter (GEN1) at a current time during which the current transaction is being processed and step A30, if the test in step A26 is positive.
- Between, and during, the step of consulting the second memory area (Z2) in order to determine the first generation counter (GEN1) at a current time during which the current transaction is being processed and step A26, if the test in step A26 is negative.
- Between, and during, the step of consulting the second memory area (Z2) in order to determine the first generation counter (GEN1) at a current time during which the current transaction is being processed and step A40.

2. Method according to Claim 1, wherein the processing of the current transaction (TR1) comprises, before step b) :

m) sending, to the second device, third data (DT1) to ask the second device to pay the amount of said credit to the account associated with the first device, said third data comprising the first generation counter (GEN1) set to the initial value.

3. Method according to either one of Claims 1 and 2, wherein the first data (DT3) received at b) comprise:

- a first signature (S) computed based on the second data (DT2), and
- a second signature (SS) computed based on the second data and on the first signature;

the method comprising, after the reception b):

n) checking the second signature (SS) based on the first signature (S) and on the second data (DT2) received in the first data (DT3) and based on a group public key (PK) associated with a group of which the first and second devices form part;

the current transaction being accepted only if the result of the check n) is positive.

4. Method according to any one of Claims 1 to 3, wherein, if it is determined, during the check c), that the first and second generation counters (GEN1, GEN1a) have values that are not equal, the current transaction is blocked.

5. Method according to any one of Claims 1 to 4, wherein the first transaction identifier (nonce2) assigned by the second device is a counter representative of a current number of transactions carried out by the second device.

6. Method according to any one of Claims 1 to 5, wherein, during the storage i), the new entry is associated with the public key (PK2) of the second device and with the first transaction identifier (nonce2); wherein the check g) comprises:

- determining a second transaction identifier (nonce1) stored, in association with the public key of the second device, in an entry (EN1) detected in the history (H1) during the check e); and
- comparing the first transaction identifier (nonce2) with the second transaction identifier (nonce1),

wherein the first predetermined condition (CD1) is detected as being satisfied if the first and second transaction identifiers are different or if the first and second transaction identifiers are counters such that the first transaction identifier is greater than the second transaction identifier.

7. Method according to any one of Claims 1 to 6, implemented by a first virtual wallet implemented by the first device, in cooperation with a second virtual wallet implemented in the second device, the current transaction being a transaction of paying said credit in a cryptographic currency.

8. Method according to any one of Claims 1 to 6, wherein the current transaction is a reputation transaction and the credit paid during said reputation transaction is a reputation credit.

9. Method according to any one of Claims 1 to 8, wherein, during the detection k), the second predetermined condition (CD2) is satisfied if the space taken up in the memory area reaches a predetermined portion of the total space of the first memory area.

10. Method according to any one of Claims 1 to 9, wherein, during the eviction l2), the entire first memory area (Z1) is emptied in order to free up memory space.

11. Method according to any one of Claims 1 to 10, wherein, during the eviction process 1):

    - the update l1) and the eviction l2) are carried out concomitantly, or
    - the eviction l2) is carried out after the update l1).

12. Method according to any one of Claims 1 to 11, wherein the update l1) of the first generation counter causes blockage of all transactions, processed by the first device, for which the second generation counter (GEN1a) received at b) has a value that differs from the new value.

13. Method according to any one of Claims 1 to 12, wherein the step of managing the first memory area (Z1) comprises, in response to the detection k) and before the eviction process 1):

    o) sending an online transaction request to an online system comprising at least one server;
    p) receiving, in response to said online transaction request, online transaction data representative of at least one online transaction carried out by said online system in cooperation with at least one external device in order to pay a credit to the account associated with the first device, said online transaction data comprising a third generation counter in association with each online transaction; and
    q) checking, for each online transaction, that the first and third generation counters (GEN1, GEN3) have values that are equal; and
    r) based on the online transaction data corresponding to each online transaction for which the third generation counter coincides with the first generation counter, updating the account balance (ACN1) stored in the second memory area (Z2).

14. Method according to Claim 13, wherein the eviction process l) comprises, after the update l1):
    s) sending the first generation counter having the new value assigned in l1) to the online system, such that the online server is able to associate the public key (PK1) of the first device with the first generation counter set to the new value in order to allow it to access at least one external device in order to process subsequent transactions.

15. Control method implemented by a system comprising a first device implementing a method according to any one of Claims 1 to 14 and a second device cooperating with the first device, the method comprising:

    t) the second device acquiring the public key (PK2) of the second device, the amount (MT1a) of the credit to be paid during the current transaction, the second generation counter (GEN1a), and the first transaction identifier (nonce2) assigned by the second device to the current transaction; and
    u) the second device sending, to the first device, first data (DT3) comprising the second data (DT2), in order to cause the payment of the amount of the credit to the account associated with the first device.

16. Computer program (PG1; PG2) comprising instructions for executing the steps of a control method according to any one of Claims 1 to 15 when said program is executed by a computer.

[Fig. 1]

[Fig. 2]

[Fig. 3]

[Fig. 4]

C2

MD2 — MODULE D'ENVOI → DT1

MD4 — MODULE DE RECEPTION ← DT3 (DT2)

MD6 — MODULE DE VERIFICATION

MD8 — MODULE DE GESTION D'HISTORIQUE : H1

MD10 — MODULE DE GESTION DE COMPTE : ACN1 (U1)

MD12 — MODULE DE GESTION DE MEMOIRE

MD14 — MODULE DE DETECTION

MD16 — MODULE DE MISE A JOUR : GEN1

MD18 — MODULE D'EVICTION : Z1

[Fig. 5]

[Fig. 6]

Gestion de la zone mémoire Z1
(A60)

A62 — Détection que l'espace mémoire ESP1 occupé dans la première zone mémoire Z1 satisfait une condition CD2

A74 — Processus d'éviction

A76 — Mise a jour du compteur de génération GEN1:
GEN1 = Val1 → Val2

A78 — Eviction de la première zone mémoire Z1

[Fig. 7]

[Fig. 8]

C1
PG1

A20 — Rx     DT3 = {DT2, S, SS}     ...
             DT2a = {PK1a, PK2, MT1a, GEN1a, nonce2}

A21 — **Vérification signature SS :**

Calcul h = Hash (DT2, S) — A22

Comparaison h avec x , où $x = a^e \bmod N$ et a = SS — A23

Avec PK = (e,N)

**Vérification clé publique : PK1a = PK1 ?** — A24

**Vérification montant : MT1a = MT1 ?** — A25

A26 — Vérification GEN1a : GEN1=GEN1a?     (GEN≠GEN1a)     NON → Blocage transaction TR1 — A28

OUI

A30 — Vérification historique H1: H1 comprend entrée EN avec PK2 ?     NON → Transaction TR1 : OK — A32

OUI

A34 — Vérification du nonce2a reçu: nonce 2a satisfait CD1?     NON → Blocage transaction TR1 — A36

OUI

**Transaction OK:** — A38

Stockage dans H1 d'une nouvelle entrée EN2 : En2 = {PK1, nonce1} — A40

Mise à jour compte ACN1 : ACN1 → + MT1 — A42

[Fig. 9]

C1
PG1

ACN1 = ACN0
GEN1 = Val1
H1 = {DH0}

TRX (DHX)

A59 — Traitement transactions TRX
hors ligne causant
occupation de l'espace mémoire dans Z1

ACN1 = ACN0 + ACNX
GEN1 = Val1
H1 = {DH0, DHX}

A62 — Détection que l'espace mémoire ESP1
occupé dans la première zone mémoire
Z1 satisfait une condition CD2 :
ESP1 ≥ TH1

NT1
PG3

TRY (DHY)

A64

A68 — Tx — RQ1 ( Requete des
transactions en ligne) — Rx — C68

A70 — Rx — DHY (ACNY, GENY) — Tx — C70

A72 — Traitement transaction TRY en ligne

ACN1 = ACN0 + ACNX + ACNY
GEN1 = Val1
H1 = {DH0, DHX, DHY}

Processus d'eviction
A74

A76 — Mise à jour du compteur
de génération GEN1 :
GEN1=Val1→Val2

ACN1 = ACN0 + ACNX + ACNY
GEN1 = Val2
H1 = { }

A78 — Eviction de la première
zone mémoire Z1

C1

A90 — Tx — RQ2 (GEN1)
Requête de mise à jour — Rx — B90

NT1

B92

ACN1 = ACN0 + ACNY
GEN1 = Val2
H1a = {DH0, DHY}

Mise à jour du compteur de
génération GENY :
GENY = Val1→Val2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3796198 A1